# EUROPEAN PATENT APPLICATION

(11) **EP 3 780 753 A1**
(43) Date of publication of application: **17.02.2021**
(21) Application number: 19784511.8
(22) Date of filing: 08.04.2019
(51) Int. Cl.: H04W 48/16

(54) **METHOD FOR CARRYING OUT INTER-NETWORK OPERATION, FIRST NETWORK, THIRD NETWORK, AND TERMINAL**

(30) Priority: 08.04.2018 CN 201810308176; 21.05.2018 CN 201810491233
(71) Applicant: Vivo Mobile Communication Co., Ltd., Dongguan, Guangdong 523860 (CN)
(72) Inventor: KE, Xiaowan, Dongguan, Guangdong 523860 (CN)
(74) Representative: Lavoix
(86) International application number: PCT/CN2019/081762
(87) International publication number: WO 2019/196799

(57) **Abstract**

An operating method between networks, a first network, a third network and a terminal are provided. The operating method between networks applied to the first network includes: determining whether a precondition is met; and performing, through a third network or an interworking network element, a related operation from a first network to a second network, in a case that the precondition is met.

## Description

### CROSS-REFERENCE TO RELATED APPLICATIONS

This application claims a priority to Chinese Patent Application No. 201810308176.1 filed on April 8, 2018, and a priority to Chinese Patent Application No. 201810491233.4 filed on May 21, 2018, the disclosures of which are incorporated in their entireties by reference herein.

### TECHNICAL FIELD

The present disclosure relates to the technical field of communications, in particular to an operating method between networks, a first network, a third network and a terminal.

### BACKGROUND

In order to meet the increasing demand for high-speed data connections, operators may deploy 5G networks. Operators may have hotspot coverage rather than full coverage in the initial stage of 5G network deployment. Some operators also have full coverage of 3G networks. 3G networks support voice services, such as realizing voice services by connecting IP multimedia subsystem (IP Multimedia Subsystem, IMS) through a circuit switched domain.

In a case that a 5G network supports voice services, a terminal can directly initiate or terminate a voice service in the 5G network. If a terminal that is performing a voice service moves out of the 5G network, and there is only a 3G cell in the neighboring cell, the voice service can only be interrupted because operations between 5G and 3G are not supported.

In a case that a 5G network does not support voice services, and a terminal that is connected to or camps on the 5G network require a voice service (such as when initiating or terminating a voice service), the voice service cannot be initiated in the 5G network.

For other communication networks in the future, the same problems also exist.

How to allow terminal users to enjoy high-speed data connections while maintaining the continuity of voice services is a technical problem that needs to be resolved at present.

### SUMMARY

Embodiments of the present disclosure provide an operating method between networks, a first network, a third network and a terminal, to achieve the objective of supporting the terminal to access a high-speed network while maintaining continuity of voice services.

In order to achieve the above objective, the present disclosure is achieved as follows:

In a first aspect, embodiments of the present disclosure provide an operating method between networks. The operating method between networks includes: determining whether a precondition is met; and performing, through a third network or an interworking network element, a related operation from a first network to a second network, in a case that the precondition is met.

In a second aspect, embodiments of the present disclosure further provide an operating method between networks. The operating method between networks includes: determining whether a precondition is met; and performing a related operation from a first network to a second network, in a case that the precondition is met, where the first network is a 5G network, and the second network is a 3G network; or, the first network is a 3G network, and the second network is a 5G network.

In a third aspect, embodiments of the present disclosure further provide an operating method between networks. The operating method between networks includes: receiving information transmitted by a second target end; and performing, according to the information, a related operation from a first network to a second network.

In a fourth aspect, embodiments of the present disclosure further provide an operating method between networks. The operating method between networks includes: acquiring characteristic information of an operation from a first network to a second network; and performing, according to the characteristic information, a related operation from the first network to the second network.

In a fifth aspect, embodiments of the present disclosure further provide a first network. The first network includes: a first determination module configured to determine whether a precondition is met; and a first performing module configured to perform, through a third network or an interworking network element, a related operation from a first network to a second network, in a case that the precondition is met.

In a sixth aspect, embodiments of the present disclosure further provide a first network. The first network includes: a second determination module configured to determine whether a precondition is met; and a second performing module configured to perform a related operation from a first network to a second network, in a case that the precondition is met, where the first network is a 5G network, and the second network is a 3G network; or, the first network is a 3G network, and the second network is a 5G network.

In a seventh aspect, embodiments of the present disclosure further provide a third network or an interworking network element, including: a third reception module configured to receive information transmitted by a second target end; and a third performing module configured to perform, according to the information, a related operation from a first network to a second network.

In an eighth aspect, embodiments of the present disclosure further provide a terminal, including: an acquisition module configured to acquire characteristic information of an operation from a first network to a second network; and a fourth performing module configured to perform, according to the characteristic information, a related operation from the first network to the second network.

In a ninth aspect, embodiments of the present disclosure further provide a first network. The first network includes a processor, a memory, and a computer program that is stored on the memory and executable on the processor. When executing the computer program, the processor is configured to implement steps of the operating method between networks as described in the above first aspect, or to implement steps of the operating method between networks as described in the above second aspect.

In a tenth aspect, embodiments of the present disclosure further provide a third network or an interworking network element. The third network includes a processor, a memory, and a computer program that is stored on the memory and executable on the processor. When executing the computer program, the processor is configured to implement steps of the operating method between networks as described in the above third aspect.

In an eleventh aspect, embodiments of the present disclosure further provides a terminal. The terminal includes a processor, a memory, and a computer program that is stored on the memory and executable on the processor. When executing the computer program, the processor is configured to implement steps of the operating method between networks as described in the above fourth aspect

In a twelfth aspect, embodiments of the present disclosure further provide a computer-readable storage medium. A computer program is stored on the computer-readable storage medium. The computer program is executed by a processor to implement steps of the operating method between networks as described in the above first aspect, or to implement steps of the operating method between networks as described in the above second aspect, or to implement steps of the operating method between networks as described in the above third aspect, or to implement steps of the operating method between networks as described in the above fourth aspect.

Based on the operating method between networks in the embodiments, a terminal can continue a voice service when the terminal moves from a first network that supports the voice service to a second network, thereby maintaining the continuity of voice services, and the terminal can fall back to a second network to establish a voice service, from a first network that does not support the voice service. It can be seen that the present disclosure can support voice services or maintain the continuity of voice services, and can also avoid the impact on the second network.

### BRIEF DESCRIPTION OF THE DRAWINGS

In order to describe a technical solution of embodiments of the present disclosure more clearly, drawings to be used in description of the embodiments of the present disclosure are introduced briefly hereinafter. Apparently, the drawings described below show only some embodiments of the present disclosure. For those skilled in the art, other drawings may be obtained according to these drawings without creative effort.
FIG. 1 is a first flow chart of an operating method between networks provided by an embodiment of the present disclosure;
FIG. 2 is a second flow chart of an operating method between networks provided by an embodiment of the present disclosure;
FIG. 3 is a third flow chart of an operating method between networks provided by an embodiment of the present disclosure;
FIG. 4 is a fourth flow chart of an operating method between networks provided by an embodiment of the present disclosure;
FIG. 5 is a fifth flow chart of an operating method between networks provided by an embodiment of the present disclosure;
FIG. 6 is a sixth flow chart of an operating method between networks provided by an embodiment of the present disclosure;
FIG. 7 is a seventh flow chart of an operating method between networks provided by embodiments of the present disclosure;
FIG. 8 is a first structural diagram of a first network provided by an embodiment of the present disclosure;
FIG. 9 is a second structural diagram of a first network provided by an embodiment of the present disclosure;
FIG. 10 is a first structural diagram of a target network provided by an embodiment of the present disclosure;
FIG. 11 is a structural diagram of a terminal provided by an embodiment of the present disclosure;
FIG. 12 is a third structural diagram of a first network provided by an embodiment of the present disclosure;
FIG. 13 is a fourth structural diagram of a first network provided by an embodiment of the present disclosure;
FIG. 14 is a second structural diagram of a target network provided by an embodiment of the present disclosure; and
FIG. 15 is a second structural diagram of a terminal provided by an embodiment of the present disclosure.

### DETAILED DESCRIPTION

In order for a terminal user to enjoy high-speed data connections while maintaining the continuity of voice services, it should be preferable for the terminal to access a first network with high-speed data connections. The operating method between networks in the embodiments of the present disclosure can support an operation from a first network (such as 5G network) to a second network (such as 3G network), when the terminal establishes a voice service (such as initiating or terminating a voice service), or when the terminal moves out of the first network, so as to support voice services or maintain continuity of voice services.

In order to support the operation from the first network (such as 5G network) to the second network (such as 3G network), an interface between the first network and the second network is required. A method to provide an interface between a 5G network and a 3G network is not clear at present. The following several methods are proposed in the present disclosure.

A first architecture: a network element of the first network supports a first interface to be connected to a network element of the second network.

The above first interface is an interface between the second network and a third network. That is, by reusing an existing protocol definition of the first interface, the network element of the first network, such as an authentication management function (Authentication Management Function, AMF) of the 5G network, communicates with the network element of the second network, such as a mobile switching center (Mobile Switching Center, MSC) of the 3G network, based on the first interface, such as Sv interface, which can avoid a change to the second network.

A second architecture: supporting interworking of the first network and the second network through a proxy network element of the third network or an interworking network element.

To facilitate understanding, an example is given that the first network is a 5G network, the second network is a 3G network, and the third network is a 4G network. The interworking of the 3G network and the 5G network is supported through a proxy 4G network element. The N26 interface is supported between a network element of the 5G network, such as AMF, and a network element of the 4G network, such as a mobility management entity (Mobility Management Entity, MME); and the network element of the 4G network further supports an Sv interface to be connected to a network element of the 3G network. The 4G network may be used as a proxy for the 3G network to communicate with the 5G network. The 4G network may be used as a proxy for the 5G network to communicate with the 3G network.

In an implementation manner, the interworking network element may be a network element belonging to the following networks: the first network, the second network, and the third network. The interworking network element may act as a proxy for the 3G network to communicate with the 5G network. The interworking network element may act as a proxy for the 5G network to communicate with the 3G network.

A third architecture: a new interface is defined between the network element of the first network and the network element of the second network.

It can be seen from the above that the first architecture and the third architecture can improve efficiency of performing an operation from the first network to the second network.

In addition, the first architecture and the second architecture can completely avoid or minimize the impact on the second network.

Different operating methods between networks are proposed based on the above three architectures according to embodiments of the present disclosure, which may be specifically expressed as an operating method from the first network to the second network.

Corresponding to the operating methods between networks under the first architecture and the third architecture, an implementation manner includes: a terminal and the first network may perform mapping of terminal-related information about a CS handover from the first network to the second network, such as mapping of security information; and the terminal transmits related information of the CS handover operation from the first network to the second network, over the first network or the second network.

Corresponding to the operating method between networks under the second architecture, an implementation manner includes: a terminal, a network element of the first network or the third network performs mapping of terminal-related information of a CS handover from the first network to the second network; a network element of the first network requests a network element of the third network to trigger a request of a PS to CS handover from the third network to the second network; the terminal transmits information related to the CS handover operation from the first network to the second network, through the first network and the third network; and the third network performs mapping between two interface messages when the first network and the second network are interacted.

In an implementation manner, the second network (such as a 3G network) may include a circuit switch (Circuit Switch, CS) domain and a packet switch (Packet Switch, PS) domain. Therefore, it can be understood that the CS of the second network refers to a circuit switched domain of the second network, that is, the CS domain, which may include but not limited to at least one of the following: MSC, MSC server, or media gateway (Media Gateway, MGW). Both 5G and 4G networks are packet switched networks. It should be noted that the network element may be any network-side device or network function. For example, the network element may be a network element of radio access network or a network element of core network.

In embodiments of the present disclosure, the network element of core network may include, but not limited to, at least one of the following: core network equipment, core network node, core network function, core network element, mobility management entity (Mobility Management Entity, MME), access management function (Access Management Function, AMF), session management function (Session Management Function, SMF), user plane function (User Plane Function, UPF), serving gateway (Serving GW, SGW), PDN gateway (PDN gate way), policy control function (Policy Control Function, PCF), policy and charging rules function (Policy and Charging Rules Function, PCRF) unit, serving GPRS support node (Serving GPRS Support Node, SGSN), or gateway GPRS support node (Gateway GPRS Support Node, GGSN) radio access network equipment.

In embodiments of the present disclosure, the network element of radio access network may include but not limited to at least one of the following: radio access network equipment, radio access network node, radio access network function, radio access network element, 3GPP radio access network, non-3GPP radio access network, centralized unit (Centralized Unit, CU), distributed unit (Distributed Unit, DU), base station, evolved base station (evolved Node B, eNB), 5G base station (gNB), radio network controller (Radio Network Controller, RNC), base station (NodeB), non-3GPP interworking function (Non-3GPP InterWorking Function, N3IWF), access controller (Access Controller, AC) node, access point (Access Point, AP) device, or wireless local area networks (Wireless Local Area Networks, WLAN) node.

The base station may be a base station (BTS, Base Transceiver Station) in GSM or CDMA, a base station (NodeB) in WCDMA, or an evolved base station (eNB or e-NodeB, evolutional Node B) in LTE, or 5G base station (gNB), which is not limited in the embodiments of the present disclosure.

In the present disclosure, eLTE is a way for EUTRA to directly connect to 5GC. EPS may also referred to as LTE.

In the present disclosure, an emergency service may also be referred to as one of: an emergency voice service or an emergency IMS voice service. An indication of whether an emergency service is supported may include but not limited to at least one of the following: emergency services support indicator (Emergency Services Support indicator), or emergency services fallback support indicator (Emergency Services Fallback).

In the present disclosure, the voice service may also be referred to as one of the following: IMS voice service over PS domain session. The indication of whether the voice service is supported may include but not limited to at least one of the following: supported indication of IMS voice service over PS domain session (IMS voice over PS Session Supported Indication), supported indication of IMS voice service over CS domain, or IMS voice service over PS session supported indication over 3GPP (IMS voice over PS Session Supported Indication over 3GPP).

In the present disclosure, a voice service may include an emergency service. The emergency service is also a kind of voice service.

In the present disclosure, redirection (Redirection) may refer to a manner in which a radio access network releases connection between UE and the network and indicates a redirection frequency.

In the present disclosure, a CS handover from the first network to the second network may also be referred to as, but not limited to, one of the following: PS to CS SRVCC handover, first network SRVCC, SRVCC of first network to second network, first network SRVCC handover, PS to CS handover, PS to CS handover from the first network to the second network, supported voice service continuity from the first network to the second network, supported single radio voice call continuity from the first network to the second network, or fallback of the first network to the second network, etc. The standards organization may give other names to them, and the present disclosure is not affected by the names.

In the present disclosure, the handover operation from the first network to the second network may also be referred to as, but not limited to, one of the following: interoperation between the first network and the second network, or fallback from the first network to the second network. The standards organization may give other names to them, and the present disclosure is not affected by the names.

In the present disclosure, CS handover from 5G network to 3G network may also be referred to as, but not limited to, one of the following: PS to CS SRVCC handover, 5G SRVCC, 5G to 3G SRVCC, 5G SRVCC handover, PS to CS domain handover, PS to CS handover of 5G network to 3G network, supported voice service continuity of 5G network to 3G network, fallback of 5G network to 3G network, operation of 5G network to 3G network, or interoperation between 5G network and 3G network. The standards organization may give other names to them, and the present disclosure is not affected by the names.

In the present disclosure, the first network may be represented as a network employment with hotspot coverage, such as a 5G network in the initial stage. The second network may be represented as a network employment with full coverage and supporting voice services, such as a 3G network. The third network may be a 4G network. The terminal may be a mobile phone, a tablet personal computer (Tablet Personal Computer), a laptop computer (Laptop Computer), a personal digital assistant (Personal Digital Assistant, PDA), a mobile Internet device (mobile Internet Device, MID), or a wearable device (Wearable Device), etc.

In an embodiment, the first network and the second network may be represented as any two networks that support interoperation therebetween. In another embodiment, the first network and the second network may be represented as any two networks that do not support interoperation therebetween, and the third network may be any network that supports interoperation with the first network and supports interoperation with the second network, which can be specifically determined according to actual needs, and is not limited in the embodiments of the present disclosure.

The 5G network may include but not limited to at least one of the following: 5G core network, 5G radio access network, EUTRA connected to 5GC, NR connected to 5GC, NR, NG RAN, 5GC, or N3GPP, etc. 5G network element may include but not limited to at least one of the following: AMF, SMF, UPF, PCF, UDM, gNB, or eNB connected to AMF, etc.

3G network may include but not limited to at least one of the following: 3G core network, 3G radio access network, UMTS, BSS, CDMA, 3GPP2 1x, UTRAN, HSPA, GPRS, UTRA, RNS, BSS, GPRS, or HLR, etc. A network element of the 3G network may include but not limited to at least one of the following: MSC, MSC Server, MGW, SGSN, GGSN, RNC, or NodeB, etc. The CS of the 3G network refers to a circuit switched domain of the 3G network, which may include but not limited to at least one of network elements of the 3G network: 3GPP2 1x, UTRAN, HSPA, MSC, MSC Server, or MGW, etc.

The 4G network may include at least one of the following: 4G core network, 4G radio access network, EUTRA connected to EPC, EPC, EUTRAN, LTE, or EPS, etc. The network element of the 4G network may include but not limited to at least one of the following: MME, SGW, PGW, HSS, or eNB, etc.

A technical solution in embodiments of the present disclosure will be described clearly and completely with reference to the accompanying drawings in the embodiments of the present disclosure. Obviously, the described embodiments are part of the embodiments of the present disclosure, rather than all of the embodiments. Based on the embodiments in the present disclosure, all other embodiments obtained by those of ordinary skill in the art without creative effort shall fall within the protection scope of the present disclosure.

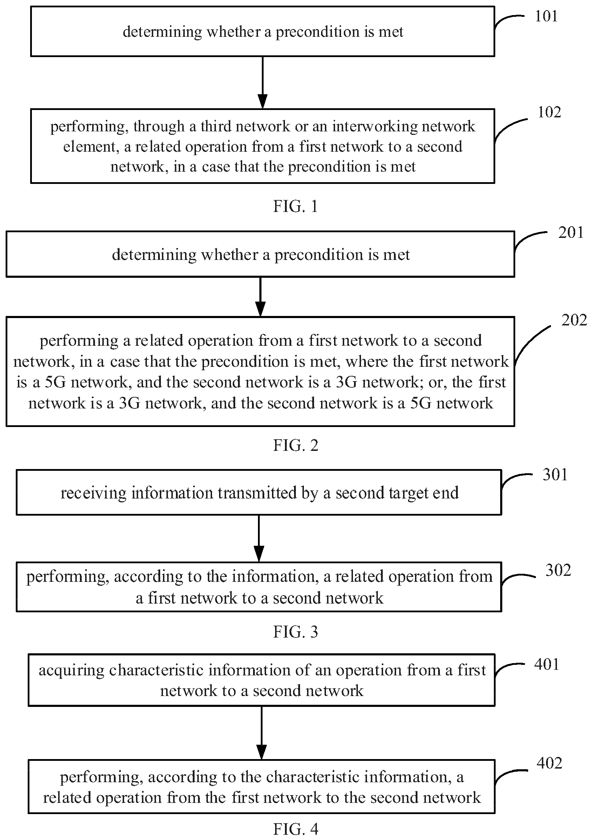

Referring to FIG. 1, FIG. 1 is a first flow chart of an operating method between networks provided by an embodiment of the present disclosure. The operating method between networks in this embodiment may be applied to the second architecture. The operating method between networks in this embodiment is applied to a network element of a first network, and as shown in FIG. 1, includes the following steps:
step 101, determining whether a precondition is met; and
step 102, performing, through a third network or an interworking network element, a related operation from a first network to a second network, in a case that the precondition is met.

In some embodiments, the first network may be a 5G network, and the second network may be a 3G network. In other embodiments, the first network may be a 3G network; the second network may be a 5G network.

In some embodiments, the first network or the second network may include at least one of the following: CS domain or PS domain. The CS domain may be a circuit switched domain of the network; the PS domain may be a packet switched domain of the network. For example, a 4G network or a 5G network may only include a PS domain. For another example, a 3G network may include a CS domain and a PS domain.

Optionally, the network element of the first network may be one of the following: a core network element of the first network, or a radio access network element of the first network. In a case that the first network is a 5G network, the core network element of the first network may be one of the following: AMF, SMF, or UDM; and the radio access network element of the first network may be one of the following: NG RAN, gNB, or eNB. In a case that the first network is a 3G network, the core network element of the first network may be one of the following: SGSN, GGSN, or HLR; and the core network element of the first network may be one of the following: UMTS, BSS, nodeB, or RNC. In order to support interworking between networks, some network elements of different networks can be co-located, for example, PGW and GGSN, GGSN and UPF, GGSN and SMF, PGW-C and SMF, PGW-U and UPF, HLR and UDM.

In some optional embodiments of the present disclosure, it may be determined that the precondition is satisfied, in a case that at least one of the following is satisfied:
acquiring first related information of the operation from the first network to the second network (for example, receiving the first related information from a terminal);
acquiring first related information of a PS operation from the first network to the second network (for example, receiving the first related information from a terminal);
acquiring first related information of a CS operation from the first network to the second network (for example, receiving the first related information from a terminal);
receiving handover request information from the first network to the second network (for example, receiving a handover request from the radio access network element);
there being no direct interface between the first network and the second network, and performing interaction through the third network or the interworking network element; or
the terminal accessing the second network.

In an implementation manner, the terminal accessing the second network includes one of the following: the terminal initiating a location update to the second network, the terminal initiating an initial attachment to the second network, or CS handover of the terminal from the first network to the second network. In an implementation manner, the terminal accessing the second network may trigger the second network (such as the PS domain of the second network) to request the context from the first network, and the first network transfers the context of the terminal to the second network. In an implementation manner, in a case that the second network is a 3G network, the terminal initiating a location update to the second network may include transmitting a routing area update request to the SGSN. In a case that the second network is a 5G network, the terminal initiating a location update to the second network may include transmitting, by the terminal, a registration request to an AMF, and the type of the registration request may be mobile registration update.

In an embodiment, the operation from the first network to the second network may include at least one of the following: a handover from the first network to the second network, a PS handover from the first network to the second network, PS to CS handover from the first network to the second network, a related operation about the terminal context from the first network to the second network, data forwarding from the first network to the second network, or IP address retention from the first network to the second network.

In an implementation manner, the related operation about the terminal context from the first network to the second network may be a related operation of requesting and transferring the terminal context. For example, after receiving a request for the terminal context from the second network, the first network transmits a context response to the second network. The context response includes terminal information.

In an implementation manner, the CS operation from the first network to the second network includes at least one of the following: PS to CS handover.

Optionally, the network element of the first network may acquire the first related information from at least one of the following: a terminal, an SMF, a UDM, a core network element of the first network, or a radio access network element of the first network. In an implementation manner, when the terminal switches or updates a location in the first network, a network element of a source core network may transmit the first related information to a network element of a target core network. The network element of the target core network may transmit the first related information to the network element of the target radio access network. The network element of the source radio access network may transmit the first related information to the network element of the target radio access network or the network element of the source core network.

The acquiring may be understood as acquiring from configuration, acquiring through receiving, acquiring through receiving after a request, or acquiring after processing according to received information, which can be specifically determined according to actual needs, and is not limited in the embodiments of the present disclosure.

Further, the first related information may include at least one of the following: capability information of the second network, an IMS session transfer number, mobile station international subscriber identity number (MS international PSTN/ISDN number, MSISDN for short), information for indicating whether a service is an emergency service, or priority information. It should be understood that the first related information may be expressed as any one of: first related information of an operation from the first network to the second network, first related information of a PS operation from the first network to the second network, or first related information of a CS operation from the first network to the second network. That is to say, the first related information of the operation from the first network to the second network, the first related information of the PS operation from the first network to the second network, and the first related information of the CS operation from the first network to the second network may include the same content.

Further, the capability information of the second network may include one of the following: second network radio capability, supported circuit switched domain voice codec list information (Supported Codec List), information of mobile station class mark 2 (MS Class Mark 2), information of mobile station class mark 3 (MS Class Mark 3), mobile station network capability information (MS network capability), or user equipment network capability (UE network capability).

The capability information of the second network may be capability information of the second network of the terminal. In some implementation manners, the network element of the first network may acquire the capability information of the second network of the terminal from the terminal and/or other network elements of the first network.

Further, the IMS session transfer number of the terminal may include one of the following: session transfer number-single radio (Session Transfer Number-single Radio, STN-SR), emergency session transfer number-single radio (Emergency session transfer Number-single Radio, E-STN-SR), or emergency session transfer number.

Further, the international mobile subscriber identity of the terminal may include a correlation mobile subscriber international ISDN number (Correlation Mobile Subscriber International ISDN number, C-MSISDN) of an associated terminal.

Further, the priority information may include address resolution protocol (Address Resolution Protocol, ARP) information.

Optionally, the first network may receive handover request information from the first network to the second network, from the radio access network of the first network.

Further, the handover request information from the first network to the second network may include at least one of the following: indication information for a CS handover from the first network to the second network (also referred to as indication information for PS to CS handover); or indicating a target network as the second network, and transparent container information of a source radio access network to a target radio access network of a second network type.

Further, the transparent container information of the source radio access network to the target radio access network may include source radio network controller (RNC) to target RNC transparent container information (source RNC to target RNC transparent container).

Furthermore, PS to CS handover and PS to PS handover have different targets, one is the circuit switched domain and the other is the packet switched domain. According to indication information for the PS to CS handover, the network element of the first network may know that it should request the network element or the network element of the third network to initiate a PS to CS handover to the network element of the second network.

In some optional embodiments of the present disclosure, the performing the related operation from the first network to the second network may include at least one of the following:
performing a related operation of a handover from the first network to the second network;
performing a related operation of a CS handover from the first network to the second network;
performing a related operation of a PS handover from the first network to the second network;
performing a related operation about a terminal context between the first network and the second network;
performing a related operation of data forwarding from the first network to the second network;
performing a related operation of IP address retention from the first network to the second network;
performing mapping of terminal-related information of the first network to terminal-related information of the second network;
transmitting, to a first target end, second related information of the operation from the first network to the second network; or
transmitting, to a first target end, indication information of the operation from the first network to the second network.

Optionally, the first target end includes at least one of: a terminal, a network element of the third network, an interworking network element, a network element of the second network, a terminal, a network element of the first network, a radio access network element of the first network, or a network element of the third network.

In an implementation manner, the related operation about the terminal context from the first network to the second network may be a related operation of requesting and transferring the terminal context. For example, after receiving a request for the terminal context from the second network, the first network transmits a context response to the second network. The context response includes terminal information.

In an embodiment, the CS operation from the first network to the second network may include at least one of the following: PS to CS handover.

Further, the indication information of the operation from the first network to the second network may include at least one of the following:
indication information of a handover from the first network to the second network;
indication information of a CS handover from the first network to the second network;
indication information of a PS handover from the first network to the second network;
information for indicating the first network to request the terminal context from the second network;
indication information for initiating a handover from the third network to the second network;
indication information for initiating a handover from the interworking network element to the second network;
indication information for initiating a CS handover from the third network to the second network;
indication information for initiating a CS handover from the interworking network element to the second network;
indication information for initiating a PS handover from the third network to the second network;
indication information for initiating a PS handover from the interworking network element to the second network;
indication information for initiating a request of the terminal context from the third network to the first network;
indication information for initiating a request of the terminal context from the interworking network element to the first network;
indication information for initiating a request of the terminal context from the third network to the first network; or
indication information for initiating a request of the terminal context from the interworking network element to the first network.

The CS of the second network may refer to a circuit switched domain of the second network, that is, the CS domain, which may include, but not limited to, at least one of the following: an MSC, an MSC server, or a media gateway (Media Gateway, MGW). In this application scenario, after a terminal performs CS handover from the first network to the second network, the terminal performs or continues a voice service in the CS domain of the second network; and the first network may be a PS network.

Optionally, the performing the related operation of CS handover from the first network to the second network includes at least one of the following:
mapping terminal-related information of the first network to terminal-related information of the second network;
mapping terminal-related information of the first network to terminal-related information of the third network;
transmitting, to the first target end or a network element of the third network, second related information of a CS handover operation from the first network to the second network;
transmitting, to the first target end or a network element of the third network, indication information of a CS handover operation from the first network to the second network; or
transmitting, to the first target end or a network element of the third network, a handover request from the first network to the third network, where the handover request includes indication information and/or second related information of a CS handover operation from the first network to the second network.

Optionally, the first target end may include at least one of: a network element of the third network, the interworking network element, a terminal, a network element of the second network, a network element of the first network, or a network element of a radio access network of the first network.

It should be understood that in a scenario where the first target end includes a network element of the third network, the above-mentioned "transmitting to the first target end or the network element of the third network" can all be understood as "transmitting to the first target end".

In an implementation manner, based on the second related information or the indication information of the CS handover operation from the first network to the second network, the third network can know that a received handover request is a request for CS handover from the first network to the second network.

In an implementation manner, the terminal-related information of the first network may be mapped to the terminal-related information of the second network and transmitted to the third network element, and the third network forwards the terminal-related information to the second network after receiving it. In another implementation manner, the terminal-related information of the first network may be mapped to the terminal-related information of the third network and transmitted to the third network element, and the third network element may map the received terminal-related information of the third network to the terminal-related information of the second network, and then transmit the terminal-related information to the second network element. In another implementation manner, the terminal-related information of the first network may be transmitted to the third network element, and the third network element maps the received terminal-related information of the first network to terminal-related information of the second network, and then transmits the terminal-related information to the third network element.

The terminal-related information of the first network includes but is not limited to: a user identity of the first network of a terminal; network identity information of a terminal served by the first network; and security information of the first network. A format of terminal-related information of the third network or the terminal-related information of the second network is similar to a format of the terminal-related information of the first network. The difference lies in the different network types, which will not be described herein.

Further, the mapping the terminal-related information of the first network to the terminal-related information of the second network includes at least one of the following: mapping a user identity of the first network of a terminal to a user identity of the second network; mapping network identity information of a terminal served by the first network to anchor network identity information; or mapping security information of the first network to security information of the second network.

Further, in a case that the first network is a 5G network, the user identity of the first network may include at least one of the following: subscription permanent identifier (Subscription Permanent Identifier, SUPI), 5G-GUTI, 5G S-TMSI, or PEI. Further, in a case that the second network is a 3G network, the user identity of the second network may include at least one of the following: international mobile subscriber identification number (International Mobile Subscriber Identification Number, IMSI), TMSI, P-TMSI, P-TMSI signature, RAC, RAI, LAC, LAI, or IMEI.

Further, in a case that the first network is a 3G network, the user identity of the first network may include at least one of the following: IMSI, TMSI, P-TMSI, P-TMSI signature, RAC, RAI, LAC, LAI, or IMEI. Further, in a case that the second network is a 5G network, the user identity of the second network may include at least one of the following: SUPI, 5G-GUTI, 5G S-TMSI, or PEI.

Further, the mapping the user identity of the first network of the terminal to the user identity of the second network may specifically be expressed as at least one of the following: mapping a user identity of a 5G network of the terminal to a user identity of a 3G network; mapping a user identity of a 3G network of the terminal to the user identity of a 5G network; mapping SUPI of the terminal to IMSI of the second network; mapping the IMSI of the terminal to SUPI; mapping 5G-GUTI to RAI, P-TMSI and/or P-TMSI Signature, or a combination thereof; mapping RAI, P-TMSI and/or P-TMSI Signature, or a combination thereof to 5G-GUTI; mapping IMEI to PEI; or mapping PEI to IMEI.

The 5G GUTI may include two parts: UE identifier and AMF identifier. The AMF identifier includes: an AMF region identifier (AMF region ID), an AMF set identifier (AMF set), and/or an AMF pointer (AMF point). The part of the UE identifier may be referred to as 5G-TMSI.

RAI may be composed of PLMN, LAC (location area code) and RAC (routing area code). There may be an NRI field in P-TMSI.

In an embodiment, a rule for mapping between RAI, P-TMSI and/or P-TMSI Signature, or a combination thereof and 5G-GUTI may be at least one of the following: mapping between the AMF identifier and RAI, mapping between 5-TMSI and P-TMSI and P-TMSI Signature, or mapping between PLMN and PLMN.

In an embodiment, a mapping rule for mapping the user identity of the 5G network to the user identity of the 3G network includes at least one of the following:
in a case that <AMF region identifier> is 16 bits, <AMF region identifier> may be mapped to <LAC>;
in a case that <AMF region identifier> is 8 bits, <AMF region identifier> may be mapped to bits 15 to 8 in <LAC>;
in a case that <AMF set identifier> is 12 bits, bits 11 to 4 of <AMF set identifier> may be mapped to bits 7 to 0 in <LAC>; and bits 3 to 0 of <AMF set identifier> may be mapped to the 4 higher bits of the 8 most significant bits of <RAC> and/or the 4 most significant bits of <NRI>;
in a case that <AMF set identifier> is 4 bits, <AMF set identifier> may be mapped to the 4 higher bits of the 8 most significant bits of <RAC> and/or the 4 higher bits of the 8 most significant bits of <NRI>;
<AMF pointer> may be mapped to the 4 lower bits of the 8 most significant bits of <NRI>;
bits 29 to 24 of <5G-TMSI> may be mapped to bits 29 to 24 of <P-TMSI>;
bits 15 to 0 of <5G-TMSI> may be mapped to bits 15 to 0 of <P-TMSI>; or the other 8 bits of <5G-TMSI> may be mapped to the 8 most significant bits of <P-TMSI>.

In an embodiment, a mapping rule for mapping the user identity of the 3G network to the user identity of the 5G network includes at least one of the following:
in a case that <AMF region identifier> is 16 bits, <LAC> may be mapped to <AMF region identifier>;
in a case that <AMF region identifier> is 8 bits, bits 15 to 8 of <LAC> may be mapped to <AMF region identifier>;
in a case that <AMF set identifier> is 12 bits, bits 7 to 0 of <LAC> may be mapped;
the 4 higher bits of the 8 most significant bits of <NRI> may be mapped to the least significant 4 bits of <AMF set identifier>;
the 4 lower bits of the 8 most significant bits of <NRI> may be mapped to <AMF pointer>;
<RAC> may be mapped to bits 23 to 16 of <5G-TMSI>;
bits 29 to 24 of <P-TMSI> may be mapped to bits 29 to 24 of <5G-TMSI>; or
bits 15 to 0 of <P-TMSI> may be mapped to bits 15 to 0 of <5G-TMSI>.

In the process of mapping SUPI of the terminal to IMSI, the network element of the first network may determine the mapping rule of mapping SUPI to IMSI based on a specific form or format of SUPI.

Specifically, in a case that a type of SUPI is IMSI, a one-to-one mapping rule may be directly used to map SUPI to IMSI. In a case that the type of SUPI is non-IMSI, such as NAI, the network element of the first network may perform one of the following operations. 1) An additional IMSI is allocated to complete the SUPI to IMSI mapping through the additionally allocated IMSI. It should be understood that the additionally allocated IMSI is not used for the first network, and is only started when the first network needs to interoperate with the other network (such as the second network and the third network). 2) The operation from first network to the third network is not executed. 3) NAI is mapped to IMSI, that is, NAI is used as IMSI. When the NAI is longer than the IMSI, the lower bits in the NAI of the IMSI length are used as the IMSI; and when the NAI is shorter than the IMSI, complement bits are filled in the higher bits of the IMSI.

The network identity information may include one of the following: public land mobile network (Public Land Mobile Network, PLMN) or MNC. For example, network identity information of a terminal that is lastly served by the first network may be expressed as a PLMN of the terminal that is lastly served by the first network; and the anchor network identity information may be expressed as an anchor PLMN in an Sv interface message, but is not limited thereto.

The security information of the first network may include, but not limited to, at least one of the following: a key of the first network, a NAS counter, a key identifier of the first network, a confidentiality key (confidentiality key, CK), or an integrity key (IK).

In a case that the first network is a 5G network, the key of the first network may be expressed as a key related to AMF, i.e., KAMF; the key identifier of the first network may be expressed as a key set identifier in an NG radio access network (Key Set Identifier in NG RAN, ngKSI).

In a case that the first network is a 3G network, the key of the first network may be expressed as a confidentiality key (confidentiality key, CK), an integrity key (integrity key, IK); and the key identifier of the first network may be expressed as a key set identifier in a network (Key Set Identifier, KSI).

The security information of the second network may include, but not limited to, at least one of the following: a key of the second network, a NAS counter, a confidentiality key (confidentiality key, CK), an integrity key (integrity key, IK), or a network key set identifier.

In a case that the second network is a 3G network, the key identifier of the second network may be expressed as a network key set identifier (Key Set Identifier, KSI). CK may be a CK dedicated to CS handover from the first network to the second network. IK may be an IK used for CS handover from the first network to the second network.

In a case that the second network is a 5G network, a key of the second network may be expressed as a key related to AMF, i.e., KAMF; and a key identifier of the second network may be expressed as ngKSI.

The security information of the third network may include, but not limited to: a key of the third network, a NAS counter, a key identifier of the third network, NH, and NCC. The key of the third network may be expressed as a key related to ASME, i.e., KASME; the key identifier of the third network may be expressed as a key set identifier in an evolved universal terrestrial radio access network (Key Set Identifier in E-UTRAN, eKSI).

Further, the key identifier is used to identify a key. For example, eKSI may be used to identify KASME; and ngKSI may be used to identify KAMF.

Further, the NAS counter may include one of: an uplink NAS counter (NAS Uplink COUNT), or a downlink NAS counter (NAS Downlink COUNT).

Optionally, a mapping rule for mapping the security information of the first network to the security information of the second network may include at least one of following: directly mapping, according to a first mapping rule, the security information of the first network to the security information of the second network; or mapping, according to a second mapping rule, the security information of the first network to security information of the third network, and the security information of the third network to the security information of the second network.

In an implementation manner, pieces of security information of the second network respectively derived according to the first mapping rule and the second mapping rule are different. The terminal and the network need to derive the security information of the second network according to the same mapping rule.

In an implementation manner, the directly mapping, according to the first mapping rule, the security information of the first network to the security information of the second network may include: deriving CK and IK based on KAMF and/or NAS COUNT (which may be NAS Uplink COUNT or NAS Downlink COUNT); or deriving KAMF based on (CK and IK) and/or NAS COUNT (which may be NAS Uplink COUNT or NAS Downlink COUNT). Specifically, a value of 256 bits may be derived according to KAMF and/or NAS COUNT, which may correspond to a concatenation of 128-bit CK and 128-bit IK; or KAMF is derived through (a concatenation of 128-bit CK and 128-bit IK) and/or NAS COUNT. Specifically, in case of CS handover from the first network to the second network, or handover from the first network to the second network, or in a case that the first network provides the terminal context to the second network, the NAS COUNT used when mapping the security information of the first network to the security information of the second network may be the NAS Downlink COUNT.

In an implementation manner, the mapping, according to the second mapping rule, the security information of the first network to security information of the third network, and the security information of the third network to the security information of the second network may include: deriving KAMSE based on KAMF and/or NAS COUNT (which may be NAS Uplink COUNT or NAS Downlink COUNT); and deriving CK and IK according to KAMSE and/or NAS COUNT. Specifically, in case of CS handover from the first network to the second network, the NAS COUNT used when mapping the security information of the first network to the security information of the second network may be the NAS Downlink COUNT. Specifically, when a terminal moves from the first network to the second network, and initiates a location update request to the second network, the NAS COUNT used when mapping the security information of the first network to the security information of the second network may be the NAS Uplink COUNT.

In an implementation manner, the NAS Count is changed every time it is adopted, for example, incrementing by one. It is not difficult to understand that the first mapping rule is to use a single operation to derive the security information of the second network (that is, directly deriving the security information of the second network based on the security information of the first network), and the NAS Count (such as NAS Downlink Count) is used once. The second mapping rule is to use two operations to derive the security information of the second network (that is, the security information of the third network is calculated based on the security information of the first network, and then the security information of the second network is calculated based on the security information of the third network), and the NAS Count (such as NAS Downlink Count) is used twice. Therefore, the security information of the second network derived according to the first mapping rule is different from the security information of the second network derived according to the second mapping rule.

It is not difficult to understand that, compared with the second mapping rule, the direct mapping of the security information of the first network to the security information of the second network according to the first mapping rule can reduce the number of mapping operations of security information, thereby improving the handover efficiency. Compared with the first mapping rule, the mapping of the security information of the first network to the security information of the second network according to the second mapping rule can reduce impacts on the first network and the third network.

Further, the second related information includes at least one of the following: identification information of a target radio access network node (such as RNC) of the second network, security information of the second network, anchor network identity information, supported circuit switched domain voice codec list information, information of mobile station class mark 2, information of mobile station class mark 3, transparent container information of a source radio access network to a target radio access network of a second network type, an IMS session transfer number, an international mobile subscriber identity, mobile station network capability information, user equipment network capability, information for indicating whether a service is an emergency service, priority information, the terminal-related information of the first network, the terminal-related information of the second network, terminal-related information of the third network, or information about serving gateway selection.

Specifically, the terminal-related information of the first network may include at least one of the following: user identity information of the first network, or security information of the first network.

Specifically, the terminal-related information of the second network may be terminal-related information of the second network derived based on the mapping of the terminal-related information of the first network, and may include at least one of the following: user identity information (such as IMSI) of the second network derived according to the mapping of the user identity information of the first network, or the security information of the second network derived according to the mapping of the security information of the first network.

Specifically, the terminal-related information of the third network may be terminal-related information of the third network derived based on the mapping of the terminal-related information of the first network, and may include at least one of the following: identity information (such as SUPI) of the third network derived according to the mapping of the user identity information of the first network, or the security information of the third network derived according to the mapping of the security information of the first network.

Specifically, the information about serving gateway selection may include at least one of the following: information for indicating whether a serving gateway is selected, or whether a node needs to be connected to a serving gateway. In an implementation manner, information for indicating that a serving gateway needs to be selected may be expressed as a type of a node that needs to be connected to the serving gateway, such as SGSN supporting an S4 interface, and information for indicating that a serving gateway does not need to be selected may be expressed as a type of a node that does not need a serving gateway, such as SGSN that supports Gn interface and/or Gp interface. It should be noted that there is no SGW node in the 5G network, and AMF is directly connected to PGW-C/SMF. However, some networks need to be connected to the PGW through an SGW node. In order to support interaction between or among networks, when a terminal moves from a 5G network to a 3G network, for an SGSN with S4 interface type, the SGSN needs to be connected PGW-C/SMF and PGW-U/UPF through SGW. It is not difficult to understand that in order to reduce impacts of the 5G network and the 3G network, when the terminal moves from the 5G network to the 3G network, for an SGSN that needs to be connected to an SGW, the third network or the interworking network element can be instructed to select an SGW for the terminal. For an SGSN that does not need to be connected to an SGW, the third network or the interworking network element may not be instructed to select an SGW for the terminal.

In an implementation manner, the terminal-related information of the first network may be mapped to the terminal-related information of the second network and transmitted to the third network element, and the third network forwards the terminal-related information to the second network after receiving it. In another implementation manner, the terminal-related information of the first network may be mapped to the terminal-related information of the third network and transmitted to the third network element, and the third network element may map the received terminal-related information of the third network to the terminal-related information of the second network, and then transmit the terminal-related information to the second network element. In another implementation manner, the terminal-related information of the first network may be transmitted to the third network element, and the third network element maps the received terminal-related information of the first network to terminal-related information of the second network, and then transmits the terminal-related information to the third network element.

The anchor network identity information may be expressed as an anchor PLMN.

Further, the indication information of the CS handover operation from the first network to the second network may include at least one of the following: indication information for a CS handover from the first network to the second network; indication information for initiating a CS handover from the third network to the second network; or indication information for initiating a CS handover from the interworking network element to the second network.

The indication information for initiating a CS handover from the third network to the second network, or the indication information for initiating CS handover from the interworking network element to the second network may specifically be expressed as: indication information for initiating PS to CS single radio frequency voice Service continuity (Single Radio Voice Call Continuity, SRVCC) handover.

A handover request from the first network to the third network may be expressed as a handover request based on an N26 interface, and the N26 interface is a network interface between the first network and the third network.

The handover request from the first network to the third network is used to indicate CS handover from the first network to the second network, and specifically, may include indication information of a CS handover operation from the first network to the second network. In this way, after receiving the request, the third network element may determine that a target network to be switched by the terminal is the second network instead of the third network, thereby improving the accuracy of handover.

It should be noted that, in some specific implementation manners, after performing the related operation from the first network to the second network, the method further includes: receiving a CS handover response from the first network to the second network, where the CS handover response is returned by the second network.

In these embodiments, a network element of the first network performs a related operation from the first network to the second network via the third network. Therefore, the network element of the first network can receive, via the third network, a CS handover response from the first network to the second network, which is returned by the second network.

It should be noted that the CS handover response from the first network to the second network may include at least one of the following: transparent container information of a target radio access network to a source radio access network of a second network type, such as target RNC to source RNC transparent container indication information (target RNC to source RNC transparent container).

It should be noted that, in some specific implementation manners, the performing the related operation of the CS handover from the first network to the second network may further include: transmitting, to the terminal, transparent container information of a target radio access network to a source radio access network of a second network type, such as target RNC to source RNC transparent container indication information (target RNC to source RNC transparent container); and transmitting, to the terminal, indication information for handover from the first network to the second network, such as indication information for CS handover from the first network to the second network.

Therefore, after receiving the above-mentioned indication information, a terminal can perform a related operation of CS handover from the first network to the second network. After the terminal completes the CS handover from the first network to the second network, the terminal performs or continues a voice service on the second network. It is not difficult to understand that after a terminal enjoys a high-speed data connection on the first network, when a voice service needs to be performed or when the terminal removes out of the coverage of the first network, the progress of the voice service is supported, or the continuity of the voice service is maintained. In some preferred embodiments, the first network may be a 5G network; the second network may be a 3G network; and the third network may be a 4G network. In some other preferred embodiments, the first network may be a 3G network; the second network may be a 5G network.

It should be noted that the various optional implementation manners introduced in the embodiments of the present disclosure can be implemented in combination with each other or can be implemented separately, which are not limited in embodiments of the present disclosure.

Based on the operating method between networks in the embodiments, it can be realized that a terminal can continue a voice service when the terminal moves from a first network that supports the voice service to a second network, thereby maintaining the continuity of voice services, and it can also be realized that the terminal falls back to a second network to establish a voice service, from a first network that does not support the voice service. It can be seen that the present disclosure can support voice services or maintain the continuity of voice services, and can also avoid the impact on the second network.

Referring to FIG. 2, FIG. 2 is a second flow chart of an operating method between networks provided by an embodiment of the present disclosure. The operating method between networks in this embodiment can be applied to any architecture of the first architecture, the second architecture, and the third architecture, which can be specifically determined according to actual needs, and is not limited in the embodiments of the present disclosure. The operating method between networks in this embodiment is applied to a network element of a first network, and as shown in FIG. 2, includes the following steps: step 201, determining whether a precondition is met; and step 202, performing a related operation from a first network to a second network, in a case that the precondition is met.

In an embodiment, the first network is a 5G network, and the second network is a 3G network; or, the first network is a 3G network, and the second network is a 5G network. The first network and the second network may communicate with each other directly through a specific interface. Therefore, these embodiments can be applicable to the first architecture, the second architecture, and the third architecture.

It should be noted that the first network and the second network of this embodiment may also communicate through other proxy network, such as a 4G network or an interworking network element. In this application scenario, the operating method between networks can be applied to the second architecture. Specific implementation processes of the operating method between networks are the same as the implementation manners of the embodiments corresponding to FIG. 1. For details, reference may be made to the description in the foregoing embodiments. To avoid repetition, details are not described herein again.

A scenario in which the first network and the second network can directly communicate with each other through a specific interface will be described below.

In some embodiments, the first network or the second network may include at least one of: CS domain or PS domain. The CS domain may refer to a circuit switched domain of a network; and the PS domain may be a packet switched domain of a network. For example, a 4G network or a 5G network may only include a PS domain. For example, a 3G network may include a CS domain and a PS domain.

Optionally, a network element of the first network may be one of the following: a core network element of the first network, or a radio access network element of the first network. In a case that the first network is a 5G network, the core network element of the first network may be one of the following: AMF, SMF, or UDM. A core network element of the second network may be one of the following: NG RAN, gNB, or eNB. In a case that the first network is a 3G network, the core network element of the first network may be one of the following: SGSN, GGSN, or HLR; the radio access network element of the first network may be one of the following: UMTS, nodeB, or RNC. In order to support interworking between networks, some network elements of different networks may be co-located, for example, PGW and GGSN, GGSN and UPF, GGSN and SMF, PGW-C and SMF, PGW-U and UPF, HLR and UDM.

In some optional embodiments of the present disclosure, it may be determined that the precondition is meet, in a case that at least one of the following conditions is meet:
acquiring first related information of the operation from the first network to the second network (for example, receiving the first related information from a terminal);
acquiring first related information of a PS operation from the first network to the second network (for example, receiving the first related information from a terminal);
acquiring first related information of a CS operation from the first network to the second network;
receiving handover request information from the first network to the second network;
there being no direct interface between the first network and the second network, and performing interaction through the third network or the interworking network element;
there being a direct interface between the first network and the second network; or
the terminal accessing the second network.

In an implementation manner, the terminal accessing the second network includes one of the following: the terminal initiating a location update to the second network, the terminal initiating an initial attachment to the second network, or CS handover of the terminal from the first network to the second network. In an implementation manner, the terminal accessing the second network may trigger the second network (such as a PS domain of the second network) to request the context from the first network, and the first network transfers the context of the terminal to the second network. In an implementation manner, in a case that the second network is a 3G network, the terminal initiating a location update to the second network may include transmitting, by the terminal, a routing area update request to an SGSN. In a case that the second network is a 5G network, the terminal initiating a location update to the second network may include transmitting, by the terminal, a registration request to an AMF, and a type of the registration request may be mobile registration update.

Optionally, the network element of the first network may acquire the first related information from at least one of the followings: a terminal, an SMF, a UDM, a core network element of the first network, or a radio access network element of the first network. It should be understood that the first related information may be expressed as any first related information of: first related information of an operation from the first network to the second network, first related information of a PS operation from the first network to the second network, or first related information of a CS operation from the first network to the second network.

In an implementation manner, when the terminal switches or updates a location in the first network, a network element of a source core network may transmit the first related information to a network element of a target core network. The network element of the target core network may transmit the first related information to a network element of a target radio access network. The network element of the source radio access network may transmit the first related information to the network element of the target radio access network or the network element of the source core network.

The acquiring may be understood as acquiring from configuration, acquiring through receiving, acquiring through receiving after a request, or acquiring after processing according to received information, which can be specifically determined according to actual needs, and is not limited in the embodiments of the present disclosure.

Further, the first related information may specifically refer to the description of the first related information in the method embodiments in FIG. 1, which will not be described herein.

Further, for receiving information about a handover request from the first network to the second network, reference may be made to the description in the method embodiments in FIG. 1, which will not be described herein.

Optionally, the first network may receive information about a handover request from the first network to the second network, from a radio access network of the first network.

In some preferred embodiments of the present disclosure, the performing the related operation from the first network to the second network may include at least one of the following:
performing a related operation of a handover from the first network to the second network;
performing a related operation of a CS handover from the first network to the second network;
performing a related operation of a PS handover from the first network to the second network;
performing a related operation of acquiring a terminal context from the first network to the second network;
performing a related operation of data forwarding from the first network to the second network;
performing a related operation of IP address retention from the first network to the second network;
performing mapping of terminal-related information of the first network to terminal-related information of the second network;
transmitting, to a first target end, second related information of the operation from the first network to the second network; or
transmitting, to a first target end, indication information of the operation from the first network to the second network.

In an implementation manner, the related operation about the terminal context from the first network to the second network may be related operations of requesting and transferring the terminal context. For example, after receiving a request for the terminal context from the second network, the first network transmits a context response to the second network. The context response includes terminal information.

In an implementation manner, the CS operation from the first network to the second network includes at least one of the following: PS to CS handover.

Further, the indication information of the operation from the first network to the second network may include at least one of the following:
indication information for a handover from the first network to the second network;
indication information for a CS handover from the first network to the second network;
indication information for a PS handover from the first network to the second network;
information for indicating the first network to request the terminal context from the second network;
indication information for initiating a handover from the third network to the second network;
indication information for initiating a handover from the interworking network element to the second network;
indication information for initiating a CS handover from the third network to the second network;
indication information for initiating a CS handover from the interworking network element to the second network;
indication information for initiating a PS handover from the third network to the second network;
indication information for initiating a PS handover from the interworking network element to the second network;
indication information for initiating a request of the terminal context from the third network to the first network;
indication information for initiating a request of the terminal context from the interworking network element to the first network;
indication information for initiating a request of the terminal context from the third network to the first network; or
indication information for initiating a request of the terminal context from the interworking network element to the first network.

Optionally, the performing the related operation of the CS handover from the first network to the second network includes at least one of the following:
mapping terminal-related information of the first network to terminal-related information of the second network;
transmitting, to the first target end, a CS handover request from the first network to the second network;
transmitting a request of PS to CS handover to the first target end;
transmitting, to the first target end, second related information of a CS handover operation from the first network to the second network; or
transmitting, to the first target end, indication information of a CS handover operation from the first network to the second network.

Optionally, the performing the related operation of the PS handover from the first network to the second network includes at least one of the following:
mapping terminal-related information of the first network to terminal-related information of the second network;
transmitting, to the first target end, a request of a PS handover from the first network to the second network;
transmitting a PS handover request to the first target end;
transmitting, to the first target end, second related information of the operation from the first network to the second network; or
transmitting, to the first target end, indication information of PS handover operation from the first network to the second network.

Optionally, the performing the operation related to the terminal context from the first network to the second network includes at least one of the following: mapping terminal-related information of the first network to terminal-related information of the second network; transmitting a context acquisition request to the first target end; transmitting, to the first target end, second related information of the operation from the first network to the second network; or transmitting, to the first target end, indication information of the operation of acquiring the terminal context.

Optionally, the first target end includes at least one of: a terminal, a network element of a third network, an interworking network element, a network element of a first network, a network element of a radio access network of the first network, or a network element of the second network.

Further, the second related information may specifically refer to the description of the second related information in the method embodiments in FIG. 1, which will not be repeated herein.

Further, the mapping the terminal-related information of the first network to the terminal-related information of the second network includes at least one of the following: mapping a user identity of the first network of the terminal to a user identity of the second network; or mapping network identity information of a terminal served by the first network to anchor network identity information.

Further, in a case that the first network is a 5G network, the user identity of the first network may include at least one of the following: subscription permanent identifier (Subscription Permanent Identifier, SUPI), 5G-GUTI, or 5G S-TMSI.

Further, in a case that the second network is a 3G network, the user identity of the second network may include at least one of the following: international mobile subscriber identification number (International Mobile Subscriber Identification Number, IMSI), TMSI, P-TMSI, P-TMSI signature, RAC, RAI, LAC, LAI, or IMEI.

Further, in a case that the first network is a 3G network, the user identity of the first network may include at least one of the following: IMSI, TMSI, P-TMSI, P-TMSI signature, RAC, RAI, LAC, LAI, or IMEI. Further, in a case that the second network is a 5G network, the user identity of the second network may include at least one of the following: SUPI, 5G-GUTI, 5G S-TMSI, or PEI.

The mapping the security information of the first network to the security information of the second network, and the mapping the user identity of the first network of the terminal to the user identity of the second network may specifically be expressed as at least one of the following: mapping a user identity of a 5G network of the terminal to a user identity of a 3G network; mapping a user identity of a 3G network of the terminal to the user identity of a 5G network; mapping SUPI of the terminal to IMSI of the second network; mapping the IMSI of the terminal to SUPI; mapping 5G-GUTI to RAI, P-TMSI and/or P-TMSI Signature, or a combination thereof; mapping RAI, P-TMSI and/or P-TMSI Signature, or a combination thereof to 5G-GUTI; mapping IMEI to PEI; or mapping PEI to IMEI.

The 5G GUTI may include two parts: UE identifier and AMF identifier. The AMF identifier includes: an AMF region identifier (AMF region ID), an AMF set identifier (AMF set), and/or an AMF pointer (AMF point). The part of the UE identifier may be referred to as 5G-TMSI.

RAI may include PLMN, LAC (location area code) and RAC (routing area code). There may be an NRI field in P-TMSI.

In an embodiment, a rule for mapping between RAI, P-TMSI and/or P-TMSI Signature, or a combination thereof and 5G-GUTI may be at least one of the following: mapping between the AMF identifier and RAI, mapping between 5-TMSI and P-TMSI and P-TMSI Signature, or mapping between PLMN and PLMN.

In an embodiment, the mapping rule for mapping the user identity of the 5G network to the user identity of the 3G network includes at least one of the following:
in a case that <AMF region identifier> is 16 bits, <AMF region identifier> may be mapped to <LAC>;
in a case that <AMF region identifier> is 8 bits, <AMF region identifier> may be mapped to bits 15 to 8 in <LAC>;
in a case that <AMF set identifier> is 12 bits, bits 11 to 4 of <AMF set identifier> may be mapped to bits 7 to 0 in <LAC>; and bits 3 to 0 of <AMF set identifier> may be mapped to the 4 higher bits of the 8 most significant bits of <RAC> and/or the 4 most significant bits of <NRI>;
in a case that <AMF set identifier> is 4 bits, <AMF set identifier> may be mapped to the 4 higher bits of the 8 most significant bits of <RAC> and/or the 4 higher bits of the 8 most significant bits of <NRI>;
<AMF pointer> may be mapped to the 4 lower bits of the 8 most significant bits of <NRI>;
bits 29 to 24 of <5G-TMSI> may be mapped to bits 29 to 24 of <P-TMSI>;
bits 15 to 0 of <5G-TMSI> may be mapped to bits 15 to 0 of <P-TMSI>; or the other 8 bits of <5G-TMSI> may be mapped to the 8 most significant bits of <P-TMSI>.

In an embodiment, a mapping rule for mapping the user identity of the 3G network to the user identity of the 5G network includes at least one of the following:
in a case that <AMF region identifier> is 16 bits, <LAC> may be mapped to <AMF region identifier>;
in a case that <AMF region identifier> is 8 bits, bits 15 to 8 of <LAC> may be mapped to <AMF region identifier>;
in a case that <AMF set identifier> is 12 bits, bits 7 to 0 of <LAC> may be mapped;
the 4 higher bits of the 8 most significant bits of <NRI> may be mapped to the least significant 4 bits of <AMF set identifier>;
the 4 lower bits of the 8 most significant bits of <NRI> may be mapped to <AMF pointer>;
<RAC> may be mapped to bits 23 to 16 of <5G-TMSI>;
bits 29 to 24 of <P-TMSI> may be mapped to bits 29 to 24 of <5G-TMSI>; or
bits 15 to 0 of <P-TMSI> may be mapped to bits 15 to 0 of <5G-TMSI>.

In the process of mapping SUPI of the terminal to IMSI, the network element of the first network may determine the mapping rule of mapping SUPI to IMSI based on a specific form of SUPI.

Specifically, in a case that a type of SUPI is IMSI, a one-to-one mapping rule may be directly used to map SUPI to IMSI. In a case that the type of SUPI is non-IMSI, such as NAI, the network element of the first network may perform one of the following operations. 1) An additional IMSI is allocated to complete the SUPI to IMSI mapping through the additionally allocated IMSI. It should be understood that the additionally allocated IMSI is not used for the first network, and is only started when the first network needs to interoperate with the other network (such as the second network and the third network). 2) The operation from first network to the third network is not executed. 3) NAI is mapped to IMSI, that is, NAI is used as IMSI. When the NAI is longer than the IMSI, the lower bits in the NAI of the IMSI length are used as the IMSI; and when the NAI is shorter than the IMSI, complement bits are padded in the higher bits of the IMSI.

The network identity information may include one of the following: public land mobile network (Public Land Mobile Network, PLMN) or MNC. For example, network identity information of a terminal that is lastly served by the first network may be expressed as a PLMN of the terminal that is lastly served by the first network; and the anchor network identity information may be expressed as an anchor PLMN in an Sv interface message, but is not limited thereto.

In a case that an embodiment is applicable to the first architecture and the third architecture, the mapping of the security information of the first network to the security information of the second network may specifically be expressed as: directly mapping the security information of the first network to the security information of the second network.

The security information of the first network may include, but not limited to, at least one of the following: a key of the first network, a NAS counter, a key identifier of the first network, a confidentiality key (confidentiality key, CK), or an integrity key (IK).

In a case that the first network is a 5G network, the key of the first network may be expressed as a key related to AMF, i.e., KAMF; and the key identifier of the first network may be expressed as a key set identifier in an NG radio access network (Key Set Identifier in NG RAN, ngKSI).

In a case that the first network is a 3G network, the key of the first network may be expressed as a confidentiality key (confidentiality key, CK), an integrity key (integrity key, IK); and the key identifier of the first network may be expressed as a key set identifier in a network (Key Set Identifier, KSI).

The security information of the second network may include, but not limited to, at least one of the following: a key of the second network, a NAS counter, a confidentiality key (confidentiality key, CK), an integrity key (integrity key, IK), or a network key set identifier.

In a case that the second network is a 3G network, the key identifier of the second network may be expressed as a network key set identifier (Key Set Identifier, KSI). CK may be a CK dedicated to CS handover from the first network to the second network. IK may be an IK used for CS handover from the first network to the second network.

In a case that the second network is a 5G network, a key of the second network may be expressed as a key related to AMF, i.e., KAMF; and a key identifier of the second network may be expressed as ngKSI.

The security information of the third network may include, but not limited to: a key of the third network, a NAS counter, a key identifier of the third network, NH, and NCC. The key of the third network may be expressed as a key related to ASME, i.e., KASME; the key identifier of the third network may be expressed as a key set identifier in an evolved universal terrestrial radio access network (Key Set Identifier in E-UTRAN, eKSI).

Further, the key identifier is used to identify a key. For example, eKSI may be used to identify KASME; and ngKSI may be used to identify KAMF.

Further, the NAS counter may include one of the following: an uplink NAS counter (NAS Uplink COUNT), or a downlink NAS counter (NAS Downlink COUNT).

Optionally, a mapping rule for mapping the security information of the first network to the security information of the second network may include at least one of following: directly mapping, according to a first mapping rule, the security information of the first network to the security information of the second network; or mapping, according to a second mapping rule, the security information of the first network to security information of the third network, and the security information of the third network to the security information of the second network.

In an implementation manner, pieces of security information of the second network respectively derived according to the first mapping rule and the second mapping rule are different. The terminal and the network need to derive the security information of the second network according to the same mapping rule. Specifically, when a terminal moves from the first network to the second network, and initiates a location update request to the second network, the NAS COUNT used when mapping the security information of the first network to the security information of the second network may be the NAS Uplink COUNT.

In an implementation manner, the NAS Count is changed every time it is adopted, for example, incrementing by one. It is not difficult to understand that the first mapping rule is to use a single operation to derive the security information of the second network (that is, directly deriving the security information of the second network based on the security information of the first network), and the NAS Count (such as NAS Downlink Count) is used once. The second mapping rule is to use two operations to derive the security information of the second network (that is, the security information of the third network is calculated based on the security information of the first network, and then the security information of the second network is calculated based on the security information of the third network), and the NAS Count (such as NAS Downlink Count) is used twice. Therefore, the security information of the second network derived according to the first mapping rule is different from the security information of the second network derived according to the second mapping rule.

In an implementation manner, the directly mapping, according to the first mapping rule, the security information of the first network to the security information of the second network may include: deriving CK and IK based on KAMF and/or NAS COUNT (which may be NAS Uplink COUNT or NAS Downlink COUNT); or deriving KAMF based on (CK and IK) and/or NAS COUNT (which may be NAS Uplink COUNT or NAS Downlink COUNT). Specifically, a value of 256 bits may be derived according to KAMF and/or NAS COUNT, which may correspond to a concatenation of 128-bit CK and 128-bit IK; or KAMF is derived through (a concatenation of 128-bit CK and 128-bit IK) and/or NAS COUNT. Specifically, in case of CS handover from the first network to the second network, or handover from the first network to the second network, or in a case that the first network provides the terminal context to the second network, the NAS COUNT used when mapping the security information of the first network to the security information of the second network may be the NAS Downlink COUNT.

In an implementation manner, the mapping, according to the second mapping rule, the security information of the first network to security information of the third network, and the security information of the third network to the security information of the second network may include: deriving KAMSE based on KAMF and/or NAS COUNT (which may be NAS Uplink COUNT or NAS Downlink COUNT); and deriving CK and IK according to KAMSE and/or NAS COUNT. Specifically, in case of CS handover from the first network to the second network, the NAS COUNT used when mapping the security information of the first network to the security information of the second network may be the NAS Downlink COUNT.

It is not difficult to understand that, compared with the second mapping rule, the direct mapping of the security information of the first network to the security information of the second network according to the first mapping rule can reduce the number of mapping operations of security information, thereby improving handover efficiency. Compared with the first mapping rule, the mapping of the security information of the first network to the security information of the second network according to the second mapping rule can reduce impacts on the first network and the third network.

Further, the indication information of the CS handover operation from the first network to the second network includes at least one of the following: indication information for a handover from the first network to the second network; or indication information for a CS handover from the first network to the second network.

Specifically, in a case that the first target end is a terminal, the transparent container information of a target radio access network to a source radio access network of a second network type, such as target RNC to source RNC transparent container indication information (target RNC to source RNC transparent container) may be expressed as indication information of a CS handover operation from the first network to the second network.

It should be noted that, in some specific implementation manners, after performing the related operation from the first network to the second network, the method further includes: receiving a CS handover response from the first network to the second network, where the CS handover response is returned by the second network.

Specifically, it should be noted that the CS handover response from the first network to the second network may include at least one of the following: transparent container information of a target radio access network to a source radio access network of a second network type, such as target RNC to source RNC transparent container indication information (target RNC to source RNC transparent container).

It should be noted that, in some specific implementation manners, the performing the operation related to CS handover from the first network to the second network may further include at least one of the following operations: transmitting, to the terminal, transparent container information of a target radio access network to a source radio access network of a second network type, such as target RNC to source RNC transparent container indication information (target RNC to source RNC transparent container); or transmitting, to the terminal, indication information for handover from the first network to the second network, such as indication information for CS handover from the first network to the second network.

Therefore, after receiving the above-mentioned indication information, a terminal can perform a related operation of a CS handover from the first network to the second network. After the terminal completes the CS handover from the first network to the second network, the terminal performs or continues a voice service on the second network. It is not difficult to understand that after a terminal enjoys a high-speed data connection on the first network, when a voice service needs to be performed or when the terminal removes out of the coverage of the first network, the performing of the voice service is supported, or the continuity of the voice service is maintained.

It should be noted that the various optional implementation manners introduced in the embodiments of the present disclosure can be implemented in combination with each other or can be implemented separately, which is not limited in embodiments of the present disclosure.

In addition, a difference between these embodiments and the embodiments corresponding to FIG. 1 lies in that the first network in these embodiments (that is, a 5G network) can communicate directly with the second network (that is, a 3G network) through a specific interface, while the precondition satisfied by a network element of the first network, and the related operations from the first network to the second network have the same parts. Therefore, in these embodiments, only the parts that are different from the embodiments in FIG. 1 are described. For the parts that are the same as the embodiments in FIG. 1, reference can be made to the relevant descriptions in the above method embodiments, and the same beneficial effects can be achieved, which will not be repeated herein, to avoid repetition.

Based on the operating method between networks in the embodiments, it can realize that a voice service can continue when a terminal moves from a first network that supports the voice service to a second network, thereby maintaining the continuity of voice services, and it can also realize that the terminal falls back to a second network to establish a voice service, from a first network that does not support the voice service. It can be seen that voice services can be supported or the continuity of voice services can be maintained in the present disclosure. In addition, different from the operating method between networks in the method embodiments of FIG. 1, the first network in these embodiments can directly communicate with the second network, thereby improving handover efficiency.

Referring to FIG. 3, FIG. 3 is a third flow chart of an operating method between networks provided by an embodiment of the present disclosure. The operating method between networks of this embodiment can be applied to the second architecture. The operating method between networks of this embodiment is applied to a network element or an interworking network element of a third network, and as shown in FIG. 3, includes the following steps:
Step 301: receiving information transmitted by a second target end.

In this embodiment, a network element of the third network may be a network element of a third network in the second architecture. The interworking network element may be an interworking network element in the second architecture. Therefore, it can be understood that this embodiment is applicable to the second architecture.

Optionally, the second target end includes but is not limited to at least one of the following: a terminal, a network element of the first network (such as AMF, SGSN), or a network element of the second network (such as SGSN, AMF).

Optionally, the information includes but is not limited to at least one of the following:
second related information of the operation from the first network to the second network;
second related information of a CS handover operation from the first network to the second network;
indication information of the operation from the first network to the second network;
indication information of a CS handover operation from the first network to the second network;
information of the first network;
information of the second network mapped from the first network;
information of the third network mapped from the first network; or
information about serving gateway selection.

Specifically, the second related information of the operation from the first network to the second network may be as described in the second related information of the operation from the first network to the second network in the embodiments of FIG. 1, and will not be described herein.

Specifically, the indication information of the operation from the first network to the second network may be as described in the indication information for the operation from the first network to the second network in the embodiments of FIG. 1, and will not be described herein.

In an embodiment, the operation from the first network to the second network includes at least one of: PS handover, CS handover, context acquisition, data forwarding, or IP address retention.

Specifically, the information about serving gateway selection may include at least one of the following: information for indicating whether a serving gateway is selected, or whether a node needs to be connected to a serving gateway. In an implementation manner, information for indicating that a serving gateway needs to be selected may be expressed as a type of a node that needs to be connected to the serving gateway, such as SGSN supporting an S4 interface, and information for indicating that a serving gateway does not need to be selected may be expressed as a type of a node that does not need a serving gateway, such as SGSN that supports Gn interface and/or Gp interface. It should be noted that there is no SGW node in the 5G network, and AMF is directly connected to PGW-C/SMF. However, some networks need to connect to the PGW through an SGW node. In order to support interaction between or among networks, when a terminal moves from a 5G network to a 3G network, for an SGSN with S4 interface type, the SGSN needs to be connected PGW-C/SMF and PGW-U/UPF through SGW. It is not difficult to understand that in order to reduce impacts of the 5G network and the 3G network, when the terminal moves from the 5G network to the 3G network, for an SGSN that needs to be connected to an SGW, the third network or the interworking network element can be instructed to select an SGW for the terminal. For an SGSN that does not need to be connected to an SGW, the third network or the interworking network element may not be instructed to select an SGW for the terminal.

The second related information of the CS handover operation from the first network to the second network corresponds to the second related information in the method embodiments in FIG. 1. For details, reference can be made to the related descriptions in the method embodiments in FIG. 1, and details are not repeated herein.

Further, the indication information of the CS handover operation from the first network to the second network may include at least one of the following: indication information for a CS handover from the first network to the second network; or indication information for initiating a CS handover from the third network to the second network.

In some implementation manners, according to the indication information of the CS handover operation from the first network to the second network, a network element or an interworking network element of the third network initiates a related operation of a CS handover from the third network to the second network.

Step 302: performing, according to the information, a related operation from a first network to a second network.

Optionally, the related operation from the first network to the second network includes at least one of the following:
mapping terminal-related information of the first network to terminal-related information of the second network;
deriving information to be transmitted by the third network to the second network, based on a mapping of information transmitted by the first network to the third network, and transmitting the information to the second network;
deriving, information to be transmitted by the third network to the first network, based on a mapping of information transmitted by the second network to the third network, and transmitting the information to the first network;
mapping and transferring information between a first interface and a second interface;
initiating a request for CS handover from the third network to the second network;
initiating a request for CS handover from the interworking network element to the second network;
initiating a request for PS handover from the third network to the second network;
initiating a request for PS handover from the interworking network element to the second network;
performing a related operation of a terminal context from the first network to the second network;
transmitting, to the second network, received information transmitted by a second target end;
mapping received terminal-related information of the first network to terminal-related information of the second network;
mapping received terminal-related information of the third network to terminal-related information of the second network; or
selecting a serving gateway for a terminal.

In some embodiments, the received terminal-related information of the third network is terminal-related information of the third network derived from the mapping of the terminal-related information of the first network; and the received terminal-related information of the second network is terminal-related information of the second network derived from the mapping of the terminal-related information of the first network.

The first interface is an interface between the second network and the third network; the second interface is an interface between the first network and the third network. Exemplarily, the first interface may be an Sv interface, and the second interface may be an N26 interface. Of course, in other implementation manners, the first interface and the second interface may also be expressed as other types of interfaces, which may be specifically determined according to actual conditions, and is not limited in the embodiments of the present disclosure.

Specifically, the mapping and transferring the information between the first interface and the second interface may specifically include at least one of the following:
mapping related information of switching based on the second interface to related information of switching based on the first interface;
transmitting the mapped related information of switching based on the first interface to the network element of the second network;
mapping the related information of switching based on the first interface to related information of switching based on the second interface; or
transmitting the mapped related information of switching based on the second interface to the network element of the first network.

That is, information transmitted by the second interface is mapped to information transmitted by the first interface and transmitted to the second network; and information transmitted by the first interface is mapped to information transmitted by the second interface and transmitted to the first network.

Further, the mapping the terminal-related information of the first network to the terminal-related information of the second network includes at least one of the following:
mapping a user identity of the first network of the terminal to a user identity of the second network;
mapping network identity information of a terminal served by the first network to anchor network identity information; or
mapping security information of the first network to security information of the second network.

Further, when the first network is a 5G network, the user identity of the first network may include at least one of the following: subscription permanent identifier (Subscription Permanent Identifier, SUPI), 5G-GUTI, or 5G S-TMSI.

Further, when the second network is a 3G network, the user identity of the second network may include at least one of the following: international mobile subscriber identification number (International Mobile Subscriber Identification Number, IMSI), TMSI, P-TMSI, P-TMSI signature, RAC, RAI, LAC, LAI, or IMEI. Further, when the first network is a 3G network, the user identity of the first network may include at least one of the following: IMSI, TMSI, P-TMSI, P-TMSI signature, RAC, RAI, LAC, LAI, or IMEI. Further, when the second network is a 5G network, the user identity of the second network may include at least one of the following: SUPI, 5G-GUTI, 5G S-TMSI, or PEI.

Further, the mapping the user identity of the first network of the terminal to the user identity of the second network may specifically be expressed as at least one of the following: mapping a user identity of a 5G network of the terminal to a user identity of a 3G network; mapping a user identity of a 3G network of the terminal to the user identity of a 5G network; mapping SUPI of the terminal to IMSI of the second network; mapping the IMSI of the terminal to SUPI; mapping 5G-GUTI to RAI, P-TMSI and/or P-TMSI Signature, or a combination thereof; mapping RAI, P-TMSI and/or P-TMSI Signature, or a combination thereof to 5G-GUTI; mapping IMEI to PEI; or mapping PEI to IMEI.

The 5G GUTI may include two parts: UE identifier and AMF identifier. The AMF identifier includes: an AMF region identifier (AMF region ID), an AMF set identifier (AMF set), and/or an AMF pointer (AMF point). The part of the UE identifier may be referred to as 5G-TMSI.

RAI may be composed of PLMN, LAC (location area code) and RAC (routing area code). There may be an NRI field in P-TMSI.

In an embodiment, a rule for mapping between RAI, P-TMSI and/or P-TMSI Signature, or a combination thereof and 5G-GUTI may be at least one of the following: mapping between the AMF identifier and RAI, mapping between 5-TMSI and P-TMSI and P-TMSI Signature, or mapping between PLMN and PLMN.

In an embodiment, a mapping rule for mapping the user identity of the 5G network to the user identity of the 3G network includes at least one of the following:
in a case that <AMF region identifier> is 16 bits, <AMF region identifier> may be mapped to <LAC>;
in a case that <AMF region identifier> is 8 bits, <AMF region identifier> may be mapped to bits 15 to 8 in <LAC>;
in a case that <AMF set identifier> is 12 bits, bits 11 to 4 of <AMF set identifier> may be mapped to bits 7 to 0 in <LAC>; and bits 3 to 0 of <AMF set identifier> may be mapped to the 4 higher bits of the 8 most significant bits of <RAC> and/or the 4 most significant bits of <NRI>;
in a case that <AMF set identifier> is 4 bits, <AMF set identifier> may be mapped to the 4 higher bits of the 8 most significant bits of <RAC> and/or the 4 higher bits of the 8 most significant bits of <NRI>;
<AMF pointer> may be mapped to the 4 lower bits of the 8 most significant bits of <NRI>;
bits 29 to 24 of <5G-TMSI> may be mapped to bits 29 to 24 of <P-TMSI>;
bits 15 to 0 of <5G-TMSI> may be mapped to bits 15 to 0 of <P-TMSI>; or
the other 8 bits of <5G-TMSI> may be mapped to the 8 most significant bits of <P-TMSI>.

In an embodiment, a mapping rule for mapping the user identity of the 3G network to the user identity of the 5G network includes at least one of the following:
in a case that <AMF region identifier> is 16 bits, <LAC> may be mapped to <AMF region identifier>;
in a case that <AMF region identifier> is 8 bits, bits 15 to 8 of <LAC> may be mapped to <AMF region identifier>;
in a case that <AMF set identifier> is 12 bits, bits 7 to 0 of <LAC> may be mapped;
the 4 higher bits of the 8 most significant bits of <NRI> may be mapped to the least significant 4 bits of <AMF set identifier>;
the 4 lower bits of the 8 most significant bits of <NRI> may be mapped to <AMF pointer>;
<RAC> may be mapped to bits 23 to 16 of <5G-TMSI>;
bits 29 to 24 of <P-TMSI> may be mapped to bits 29 to 24 of <5G-TMSI>; or
bits 15 to 0 of <P-TMSI> may be mapped to bits 15 to 0 of <5G-TMSI>.

In the process of mapping SUPI of the terminal to IMSI, the network element of the first network may determine a mapping rule of mapping SUPI to IMSI based on a specific form of SUPI.

Specifically, in a case that a type of SUPI is IMSI, a one-to-one mapping rule may be directly used to map SUPI to IMSI. In a case that the type of SUPI is non-IMSI, such as NAI, the network element of the first network may perform one of the following. 1) An additional IMSI is allocated to complete the SUPI to IMSI mapping through the additionally allocated IMSI. It should be understood that the additionally allocated IMSI is not used for the first network, and is only started when the first network needs to interoperate with the other network (such as the second network and the third network). 2) The operation from first network to the third network is not executed. 3) NAI is mapped to IMSI, that is, NAI is used as IMSI. When the NAI is longer than the IMSI, the lower bits in the NAI of the IMSI length are used as the IMSI; when the NAI is shorter than the IMSI, complement bits are padded in the higher bits of the IMSI.

The network identity information may include one of the following: public land mobile network (Public Land Mobile Network, PLMN) or MNC. For example, network identity information of a terminal that is lastly served by the first network may be expressed as a PLMN of the terminal that is lastly served by the first network; and the anchor network identity information may be expressed as an anchor PLMN in an Sv interface message, but is not limited thereto.

The security information of the first network may include, but not limited to, at least one of the following: a key of the first network, a NAS counter, a key identifier of the first network, a confidentiality key (confidentiality key, CK), or an integrity key (IK).

In a case that the first network is a 5G network, the key of the first network may be expressed as a key related to AMF, i.e., KAMF; the key identifier of the first network may be expressed as a key set identifier in an NG radio access network (Key Set Identifier in NG RAN, ngKSI).

In a case that the first network is a 3G network, the key of the first network may be expressed as a confidentiality key (confidentiality key, CK), an integrity key (integrity key, IK); and the key identifier of the first network may be expressed as a key set identifier in a network (Key Set Identifier, KSI). The security information of the second network may include, but not limited to, at least one of the following: a key of the second network, a NAS counter, a confidentiality key (confidentiality key, CK), an integrity key (integrity key, IK), or a key identifier of the second network.

In a case that the second network is a 3G network, the key identifier of the second network may be expressed as a network key set identifier (Key Set Identifier, KSI). CK may be a CK dedicated to CS handover from the first network to the second network. IK may be an IK used for CS handover from the first network to the second network.

In a case that the second network is a 5G network, a key of the second network may be expressed as a key related to AMF, i.e., KAMF; and a key identifier of the second network may be expressed as ngKSI.

The security information of the third network may include, but not limited to: a key of the third network, a NAS counter, a key identifier of the third network, NH, and NCC. The key of the third network may be expressed as a key related to ASME, i.e., KASME; the key identifier of the third network may be expressed as a key set identifier in an evolved universal terrestrial radio access network (Key Set Identifier in E-UTRAN, eKSI).

Further, the key identifier is used to identify a key. For example, eKSI may be used to identify KASME; and ngKSI may be used to identify KAMF.

Further, the NAS counter may include one of: an uplink NAS counter (NAS Uplink COUNT), or a downlink NAS counter (NAS Downlink COUNT).

Optionally, a mapping rule for mapping the security information of the first network to the security information of the second network may include at least one of following: directly mapping, according to a first mapping rule, the security information of the first network to the security information of the second network; or mapping, according to a second mapping rule, the security information of the first network to security information of the third network, and the security information of the third network to the security information of the second network.

In an implementation manner, pieces of security information of the second network respectively derived according to the first mapping rule and the second mapping rule are different. The terminal and the network need to derive the security information of the second network according to the same mapping rule.

In an implementation manner, the directly mapping, according to the first mapping rule, the security information of the first network to the security information of the second network may include: deriving CK and IK based on KAMF and/or NAS COUNT (which may be NAS Uplink COUNT or NAS Downlink COUNT); or deriving KAMF based on (CK and IK) and/or NAS COUNT (which may be NAS Uplink COUNT or NAS Downlink COUNT). Specifically, a value of 256 bits may be derived according to KAMF and/or NAS COUNT, which may correspond to a concatenation of 128-bit CK and 128-bit IK; or KAMF is derived through (a concatenation of 128-bit CK and 128-bit IK) and/or NAS COUNT. Specifically, in case of CS handover from the first network to the second network, or handover from the first network to the second network, or in a case that the first network provides the terminal context to the second network, the NAS COUNT used when mapping the security information of the first network to the security information of the second network may be the NAS Downlink COUNT.

In an embodiment, the mapping, according to the second mapping rule, the security information of the first network to security information of the third network, and the security information of the third network to the security information of the second network may include: deriving KAMSE based on KAMF and/or NAS COUNT (which may be NAS Uplink COUNT or NAS Downlink COUNT); and deriving CK and IK according to KAMSE and/or NAS COUNT. Specifically, in case of CS handover from the first network to the second network, the NAS COUNT used when mapping the security information of the first network to the security information of the second network may be the NAS Downlink COUNT. Specifically, when a terminal moves from the first network to the second network, and initiates a location update request to the second network, the NAS COUNT used when mapping the security information of the first network to the security information of the second network may be the NAS Uplink COUNT.

In an implementation manner, the NAS Count is changed every time it is used, for example, incrementing by one. It is not difficult to understand that the first mapping rule is to use a single operation to derive the security information of the second network (that is, directly deriving the security information of the second network based on the security information of the first network), and the NAS Count (such as NAS Downlink Count) is used once. The second mapping rule is to use two operations to derive the security information of the second network (that is, the security information of the third network is calculated based on the security information of the first network, and then the security information of the second network is calculated based on the security information of the third network), and the NAS Count (such as NAS Downlink Count) is used twice. Therefore, the security information of the second network derived according to the first mapping rule is different from the security information of the second network derived according to the second mapping rule.

It is not difficult to understand that mapping the security information of the first network to the security information of the second network according to the first mapping rule can reduce the security information mapping operation, thereby improving the handover. Efficiency: Compared with the first mapping rule and the second mapping rule, mapping the security information of the first network to the security information of the second network can reduce the impact on the first network and the third network.

In some preferred embodiments, the first network may be a 5G network; the second network may be a 3G network; and the third network may be a 4G network.

It should be noted that t various optional implementation manners introduced in the embodiments of the present disclosure can be implemented in combination with each other or can be implemented separately, and the embodiments of the present disclosure are not limited herein.

In addition, these embodiments are implementation manners of a network element or an interworking network element of the third network corresponding to the method embodiments of FIG. 1 and FIG. 2. Therefore, reference can be made to the related descriptions in the method embodiments of FIG. 1 and FIG. 2, and the same beneficial effects can be achieved, which will not be described herein, to avoid repeating the description.

Based on the operating method between networks in the embodiments, it can realize that a voice service can continue when a terminal moves from a first network that supports the voice service to a second network, thereby maintaining the continuity of voice services, and it can also realize that the terminal falls back to a second network to establish a voice service, from a first network that does not support the voice service. It can be seen that the present disclosure can support voice services or maintain the continuity of voice services, and can also avoid the impact on the second network.

Reference is made to FIG. 4, which is a fourth flow chart of an operating method between networks provided by an embodiment of the present disclosure. The operating method between networks in this embodiment can be applied to any architecture of the first architecture, the second architecture, and the third architecture, which can be specifically determined according to actual needs, and is not limited in the embodiments of the present disclosure. The method for operating between networks in this embodiment is applied to a terminal, and as shown in FIG. 4, includes the following steps:
Step 401: acquiring characteristic information of an operation from a first network to a second network.

In an implementation manner, the terminal may acquire the characteristic information of the operation from the first network to the second network, by receiving characteristic information of a handover operation from the first network to the second network transmitted by a network element of the first network.

Optionally, the characteristic information of the operation from the first network to the second network includes at least one of the following:
indication information of a handover operation from the first network to the second network;
second related information of a CS handover operation from the first network to the second network;
second related information of the operation from the first network to the second network; or
the terminal moving from the first network to the second network.

Specifically, for the second related information, reference may be made to the description of the second related information in the method embodiments in FIG. 1, which will not be repeated herein.

Optionally, the indication information of the handover operation from the first network to the second network includes at least one of the following:
indication information for a handover from the first network to the second network;
indication information for a CS handover from the first network to the second network;
indication information for a PS handover from the first network to the second network; or
transparent container information of a target radio access network to a source radio access network of a second network type.

Further, the transparent container information of the target radio access network to the source radio access network of the second network type may include target radio network controller (RNC) to source RNC transparent container indication information, that is, target RNC to source RNC transparent container.

In an implementation manner, the transparent container information of the target radio access network to the source radio access network of the second network type may be expressed as indication information of a CS handover operation from the first network to the second network. By reading the transparent container information of the target radio access network to the source radio access network of the second network type, a terminal can know that a target network to be currently switched is the second network, and further switches to a CS domain of the second network to perform a voice service, which can improve the accuracy of handover.

Step 402: performing, according to the characteristic information, a related operation from the first network to the second network.

Optionally, the performing the related operation from the first network to the second network includes: mapping terminal-related information of the first network to terminal-related information of the second network.

In an implementation manner, the mapping the terminal-related information of the first network to the terminal-related information of the second network may include one of the following: directly mapping, according to a first mapping rule, the security information of the first network to the security information of the second network; or mapping, according to a second mapping rule, the security information of the first network to security information of the third network, and the security information of the third network to the security information of the second network.

In some optional embodiments, the first network may be a 5G network; and the second network may be a 3G network.

In some other optional embodiments, the first network may be a 3G network; and the second network may be a 5G network.

In some other optional embodiments, the third network may be a 4G network.

Further, the mapping the terminal-related information of the first network to the terminal-related information of the second network includes at least one of the following:
mapping a user identity of the first network of a terminal to a user identity of the second network;
mapping network identity information of a terminal served by the first network to anchor network identity information;
mapping security information of the first network to security information of the second network; or
mapping session information of the first network to session information of the second network.

In an implementation manner, the session information of the first network includes the mapped session information of the third network. The session information of the third network may be mapped to session information of the second network according to the second mapping rule.

Further, in a case that the first network is a 5G network, the user identity of the first network may include at least one of the following: subscription permanent identifier (Subscription Permanent Identifier, SUPI), 5G-GUTI, 5G S-TMSI, or PEI. Further, in a case that the second network is a 3G network, the user identity of the second network may include at least one of the following: international mobile subscriber identification number (International Mobile Subscriber Identification Number, IMSI), TMSI, P-TMSI, P-TMSI signature, RAC, RAI, LAC, LAI, or IMEI.

Further, in a case that the first network is a 3G network, the user identity of the first network may include at least one of the following: IMSI, TMSI, P-TMSI, P-TMSI signature, RAC, RAI, LAC, LAI, or IMEI. Further, in a case that the second network is a 5G network, the user identity of the second network may include at least one of the following: SUPI, 5G-GUTI, 5G S-TMSI, or PEI. Further, the mapping the user identity of the first network of the terminal to the user identity of the second network may specifically be expressed as at least one of the following: mapping a user identity of a 5G network of the terminal to a user identity of a 3G network; mapping a user identity of a 3G network of the terminal to the user identity of a 5G network; mapping SUPI of the terminal to IMSI of the second network; mapping the IMSI of the terminal to SUPI; mapping 5G-GUTI to RAI, P-TMSI and/or P-TMSI Signature, or a combination thereof; mapping RAI, P-TMSI and/or P-TMSI Signature, or a combination thereof to 5G-GUTI; mapping IMEI to PEI; or mapping PEI to IMEI.

The 5G GUTI may include two parts: UE identifier and AMF identifier. The AMF identifier includes: an AMF region identifier (AMF region ID), an AMF set identifier (AMF set), and/or an AMF pointer (AMF point). The part of the UE identifier may be referred to as 5G-TMSI.

RAI may be composed of PLMN, LAC (location area code) and RAC (routing area code). There may be an NRI field in P-TMSI.

In an embodiment, a rule for mapping between RAI, P-TMSI and/or P-TMSI Signature, or a combination thereof and 5G-GUTI may be at least one of the following: mapping between the AMF identifier and RAI, mapping between 5-TMSI and P-TMSI and P-TMSI Signature, or mapping between PLMN and PLMN.

In an embodiment, a mapping rule for mapping the user identity of the 5G network to the user identity of the 3G network includes at least one of the following:
in a case that <AMF region identifier> is 16 bits, <AMF region identifier> may be mapped to <LAC>;
in a case that <AMF region identifier> is 8 bits, <AMF region identifier> may be mapped to bits 15 to 8 in <LAC>;
in a case that <AMF set identifier> is 12 bits, bits 11 to 4 of <AMF set identifier> may be mapped to bits 7 to 0 in <LAC>; and bits 3 to 0 of <AMF set identifier> may be mapped to the 4 higher bits of the 8 most significant bits of <RAC> and/or the 4 most significant bits of <NRI>;
in a case that <AMF set identifier> is 4 bits, <AMF set identifier> may be mapped to the 4 higher bits of the 8 most significant bits of <RAC> and/or the 4 higher bits of the 8 most significant bits of <NRI>;
<AMF pointer> may be mapped to the 4 lower bits of the 8 most significant bits of <NRI>;
bits 29 to 24 of <5G-TMSI> may be mapped to bits 29 to 24 of <P-TMSI>;
bits 15 to 0 of <5G-TMSI> may be mapped to bits 15 to 0 of <P-TMSI>; or
the other 8 bits of <5G-TMSI> may be mapped to the 8 most significant bits of <P-TMSI>.

In an embodiment, a mapping rule for mapping the user identity of the 3G network to the user identity of the 5G network includes at least one of the following:
in a case that <AMF region identifier> is 16 bits, <LAC> may be mapped to <AMF region identifier>;
in a case that <AMF region identifier> is 8 bits, bits 15 to 8 of <LAC> may be mapped to <AMF region identifier>;
in a case that <AMF set identifier> is 12 bits, bits 7 to 0 of <LAC> may be mapped;
the 4 higher bits of the 8 most significant bits of <NRI> may be mapped to the least significant 4 bits of <AMF set identifier>;
the 4 lower bits of the 8 most significant bits of <NRI> may be mapped to <AMF pointer>;
<RAC> may be mapped to bits 23 to 16 of <5G-TMSI>;
bits 29 to 24 of <P-TMSI> may be mapped to bits 29 to 24 of <5G-TMSI>; or
bits 15 to 0 of <P-TMSI> may be mapped to bits 15 to 0 of <5G-TMSI>.

In the process of mapping SUPI of the terminal to IMSI, the network element of the first network may determine the mapping rule of mapping SUPI to IMSI based on a specific form or format of SUPI.

Specifically, in a case that a type of SUPI is IMSI, a one-to-one mapping rule may be directly used to map SUPI to IMSI. In a case that the type of SUPI is non-IMSI, such as NAI, the network element of the first network may perform one of the following operations. 1) An additional IMSI is allocated to complete the SUPI to IMSI mapping through the additionally allocated IMSI. It should be understood that the additionally allocated IMSI is not used for the first network, and is only started when the first network needs to interoperate with the other network (such as the second network and the third network). 2) The operation from first network to the third network is not executed. 3) NAI is mapped to IMSI, that is, NAI is used as IMSI. When the NAI is longer than the IMSI, the lower bits in the NAI of the IMSI length are used as the IMSI; and when the NAI is shorter than the IMSI, complement bits are padded in the higher bits of the IMSI.

The network identity information may include one of the following: public land mobile network (Public Land Mobile Network, PLMN) or MNC. For example, network identity information of a terminal that is lastly served by the first network may be expressed as a PLMN of the terminal that is lastly served by the first network; and the anchor network identity information may be expressed as an anchor PLMN in an Sv interface message, but is not limited thereto.

The security information of the first network may include, but not limited to, at least one of the following: a key of the first network, a NAS counter, a key identifier of the first network, a confidentiality key (confidentiality key, CK), or an integrity key (IK).

In a case that the first network is a 5G network, the key of the first network may be expressed as a key related to AMF, i.e., KAMF; the key identifier of the first network may be expressed as a key set identifier in an NG radio access network (Key Set Identifier in NG RAN, ngKSI).

In a case that the first network is a 3G network, the key of the first network may be expressed as a confidentiality key (confidentiality key, CK), an integrity key (integrity key, IK); and the key identifier of the first network may be expressed as a key set identifier in a network (Key Set Identifier, KSI).

The security information of the second network may include, but not limited to, at least one of the following: a key of the second network, a NAS counter, a confidentiality key (confidentiality key, CK), an integrity key (integrity key, IK), or a network key set identifier.

In a case that the second network is a 3G network, the key identifier of the second network may be expressed as a network key set identifier (Key Set Identifier, KSI). CK may be a CK dedicated to CS handover from the first network to the second network. IK may be an IK used for CS handover from the first network to the second network.

In a case that the second network is a 5G network, a key of the second network may be expressed as a key related to AMF, i.e., KAMF; and a key identifier of the second network may be expressed as ngKSI.

The security information of the third network may include, but not limited to: a key of the third network, a NAS counter, a key identifier of the third network, NH, and NCC. The key of the third network may be expressed as a key related to ASME, i.e., KASME; the key identifier of the third network may be expressed as a key set identifier in an evolved universal terrestrial radio access network (Key Set Identifier in E-UTRAN, eKSI).

Further, the key identifier is used to identify a key. For example, eKSI may be used to identify KASME; and ngKSI may be used to identify KAMF.

Further, the NAS counter may include one of: an uplink NAS counter (NAS Uplink COUNT), or a downlink NAS counter (NAS Downlink COUNT).

Optionally, a mapping rule for mapping the security information of the first network to the security information of the second network may include at least one of following: directly mapping, according to a first mapping rule, the security information of the first network to the security information of the second network; or mapping, according to a second mapping rule, the security information of the first network to security information of the third network, and the security information of the third network to the security information of the second network.

In an implementation manner, pieces of security information of the second network respectively derived according to the first mapping rule and the second mapping rule are different. The terminal and the network need to derive the security information of the second network according to the same mapping rule.

In an implementation manner, the directly mapping, according to the first mapping rule, the security information of the first network to the security information of the second network may include: deriving CK and IK based on KAMF and/or NAS COUNT (which may be NAS Uplink COUNT or NAS Downlink COUNT); or deriving KAMF based on (CK and IK) and/or NAS COUNT (which may be NAS Uplink COUNT or NAS Downlink COUNT). Specifically, a value of 256 bits may be derived according to KAMF and/or NAS COUNT, which may correspond to a concatenation of 128-bit CK and 128-bit IK; or KAMF is derived through (a concatenation of 128-bit CK and 128-bit IK) and/or NAS COUNT. Specifically, in case of CS handover from the first network to the second network, or handover from the first network to the second network, or in a case that the first network provides the terminal context to the second network, the NAS COUNT used when mapping the security information of the first network to the security information of the second network may be the NAS Downlink COUNT.

In an embodiment, the mapping, according to the second mapping rule, the security information of the first network to security information of the third network, and the security information of the third network to the security information of the second network may include: deriving KAMSE based on KAMF and/or NAS COUNT (which may be NAS Uplink COUNT or NAS Downlink COUNT); and deriving CK and IK according to KAMSE and/or NAS COUNT. Specifically, in case of CS handover from the first network to the second network, the NAS COUNT used when mapping the security information of the first network to the security information of the second network may be the NAS Downlink COUNT. Specifically, when a terminal moves from the first network to the second network, and initiates a location update request to the second network, the NAS COUNT used when mapping the security information of the first network to the security information of the second network may be the NAS Uplink COUNT.

It is not difficult to understand that, compared with the second mapping rule, the direct mapping of the security information of the first network to the security information of the second network according to the first mapping rule can reduce the number of mapping operations of security information, thereby improving handover efficiency. Compared with the first mapping rule, the mapping of the security information of the first network to the security information of the second network according to the second mapping rule can reduce impacts on the first network and the third network.

In this way, by performing related operations from the first network to the second network, it is possible to support that a voice service is performed in a process of switching from the first network to the second network, thereby improving the service quality of voice services of a terminal.

Optionally, before acquiring the indication information of the handover operation from the first network to the second network, the method further includes: transmitting, to the first network, first related information of a CS handover operation from the first network to the second network; or, transmitting, to the first network, first related information of a operation from the first network to the second network.

Further, the first related information may specifically refer to the descriptions of the first related information in the method embodiments in FIG. 1, which will not be repeated herein.

It is not difficult to understand that a terminal may transmit, to a first network, first related information of a CS handover operation from the first network to a second network, or first related information of an operation from the first network to the second network, to trigger a network element of the first network to perform step 102 in the method embodiments of FIG. 1, or step 202 corresponding to the method embodiments of FIG. 2. Further, the terminal can perform step 402 according to information related to CS handover from the first network to the second network that is transmitted by the network element of the first network in the process of performing step 102 or step 202, so as to implement the handover from the first network to the second network and perform voice services on the second network, thereby supporting voice services or maintaining the continuity of voice services.

In some optional embodiments, the first network may be a 5G network; the second network may be a 3G network; and the third network may be a 4G network. In some other optional embodiments, the first network may be a 3G network; and the second network may be a 5G network.

It should be noted that the various optional implementation manners introduced in the embodiments of the present disclosure can be implemented in combination with each other or can be implemented separately, which is not limited in embodiments of the present disclosure.

In addition, these embodiments are implementation manners of a terminal corresponding to the above-mentioned method embodiments of FIG. 1, FIG. 2 and FIG. 3. Therefore, reference can be made to the relevant descriptions in the above-mentioned method embodiments of FIG. 1, FIG. 2 and FIG. 3, and the same beneficial effects can be achieved, which will not be described herein, to avoid repeating the description.

Based on the operating method between networks in the embodiments, a terminal can continue a voice service when the terminal moves from a first network that supports the voice service to a second network, thereby maintaining the continuity of voice services, and the terminal can fall back to a second network to establish a voice service, from a first network that does not support the voice service. Therefore, the present disclosure can support voice services or maintain the continuity of voice services.

In order to facilitate the understanding of implementation processes of the operating method between networks, an example is given below that the first network is a 5G network, the second network is a 3G network, and the third network is a 4G network.

### First implementation manner:

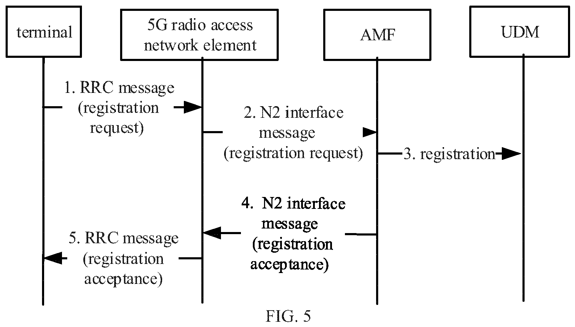

This implementation manner is specifically used to describe a process before initiating a handover from a 5G network to a 3G network. Reference is made to FIG. 5. As shown in FIG. 5, the following steps are included.

In step 1, a terminal transmits an RRC message to a network element of a 5G radio access network, and the RRC message includes a registration request message.

In step 2, the network element of the 5G radio access network transmits an N2 interface message to a network element of a 5G core network, and the N2 interface message includes the registration request message. In practical applications, the above N2 interface message may specifically be represented as an initial UE (User Equipment, user equipment, namely terminal) message. In FIG. 5, the network element of the 5G core network is represented as an AMF. It should be understood that the expression form of the 5G core network element is not restricted in the present disclosure, and in other embodiments, the 5G core network may also be expressed in other forms.

Optionally, the registration request message includes first related information of a CS handover operation from the first network to the second network, or first related information of an operation from the first network to the second network. Specifically, the first related information may refer to the description of the first related information in the method embodiments in FIG. 1, and the first related information may include, but not limited to, indicating capability information of the second network of the terminal.

Further, the capability information of the second network may include one of the following: radio capability of the second network; supported circuit switched domain voice codec list information, information of mobile station class mark 2, information of mobile station class mark 3, mobile station network capability information, or user equipment network capability.

In step 3, the AMF performs registration in a UDM to acquire IMS session transfer number and MSISDN.

In step 4, AMF transmits the N2 interface message to the network element of the 5G radio access network, and the N2 interface message includes a registration acceptance message. Optionally, the foregoing N2 interface message may specifically be expressed as an initial UE context establishment request message or a downlink NAS transmission message, which is used to indicate the second related information.

The AMF may determine second related information of the CS handover operation from the first network to the second network according to the acquired first related information. Specifically, the second related information may refer to the description of the second related information in the method embodiments in FIG. 1, and the second related information may include, but not limited to, indication information for an operation from a 5G network to a 3G network.

In step 5, the 5G radio access network transmits an RRC message to the terminal, and the RRC message includes the registration acceptance message. Optionally, the registration acceptance message indicates the second related information.

### Second implementation manner:

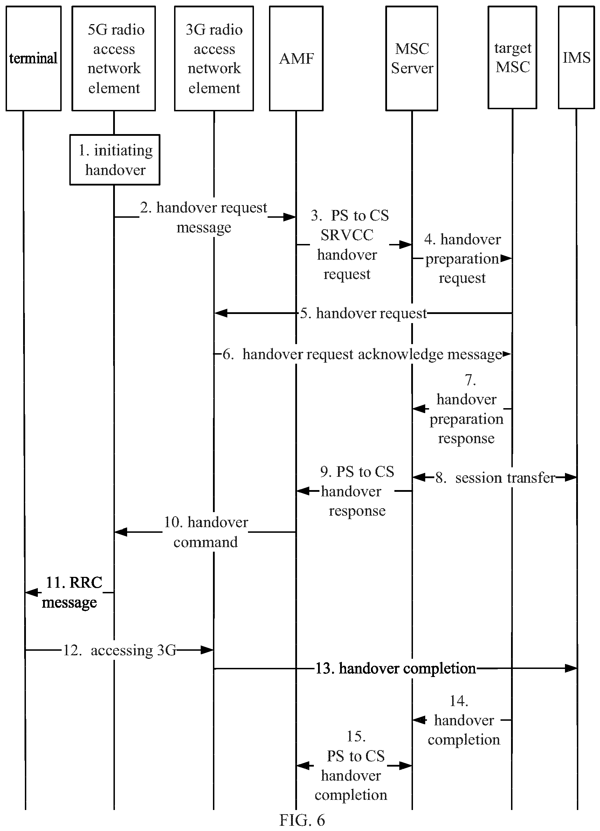

This implementation manner mainly describes a specific process of a handover from a 5G network to a 3G network. Reference is made to FIG. 6. As shown in FIG. 6, the following steps are included.

In step 1, a network element of a 5G radio access network initiates a CS handover from the 5G network to the 3G network. The reason for the initiation may include but not limited to one of the following: receiving a QoS flow establishment request for a voice service, or a handover event occurring when a voice service exists and a terminal moves out of a 5G network.

In step 2, the network element of the 5G radio access network transmits an N2 handover request message to a network element of a 5G core network. In FIG. 6, the network element of the 5G core network is represented as an AMF. It should be understood that the present disclosure does not limit the form or format of the network element of the 5G core network. In other embodiments, the 5G core network may also be represented in other forms.

The handover request message includes at least one of the following: first related information of a CS operation from the first network to the second network, first related information of an operation from the first network to the second network, handover request information from the first network to the second network, indication information for a CS handover from 5G network to 3G network, source RNC to target RNC transparent container, CSG ID, CSG Mode, or MS Class mark 2. For the above-mentioned first related information and the handover request information, reference may be made to the description of the first related information in the embodiments of FIG. 1 for details, which will not be repeated herein.

The AMF maps terminal-related information of the 5G network to terminal-related information of the 3G network and derives the terminal-related information of the 3G network, specifically as described in the embodiments of FIG. 2. For example, 5G security information (such as KAMF) is mapped to 3G security information (such as CK, IK), a PLMN of a terminal that is lastly served by the 5G network is mapped to an anchor PLMN, and an SUPI of the terminal is mapped to IMSI.

In step 3, the AMF transmits a PS to CS SRVCC handover request to the network element of the 3G network.

In FIG. 6, the network element of the 3G network is represented as an MSC Server. It should be understood that the present disclosure does not limit the form of the network element of the 3G network. In other embodiments, the network element of the 3G network may also be represented in other forms.

Optionally, the handover request includes at least one of the following: second related information of the CS handover operation from the first network to the second network, source RNC to target RNC transparent container, CSG ID, CSG Mode, MS Class mark 2, CK, IK, IMS session transfer number (such as STN-SR/E-STN-SR) STN-SR/E-STN-SR, emergency service indication information, or priority information.

For the above-mentioned second related information, reference may be made to the description of the second related information in the method embodiments in FIG. 1, which is not repeated herein.

For the above-mentioned second related information, reference may be made to the description of the second related information in the method embodiments in FIG. 1.

In step 4, the MSC Server transmits a handover preparation request to a target MSC.

In step 5, the target MSC transmits a handover request to a 3G radio access network element.

In step 6, the 3G radio access network element transmits a handover request acknowledge message to the MSC Server. The message includes target RNC to Source RNC transparent container.

In step 7, the target MSC transmits a handover preparation response message to the MSC Server. The message includes target RNC to Source RNC transparent container.

In step 8, the MSC Server transmits an IMS session transfer number to the IMS, to request transferring an IMS session to CS of the 3G network.

In step 9, the MSC Server transmits a PS to CS handover response message to the AMF. The message includes target RNC to Source RNC transparent container.

In step 10, the AMF transmits a handover command message to the network element of the 5G radio access network. The message may include at least one of the following: second related information of the CS handover operation from the first network to the second network, indication information for CS handover from the first network to the second network, or target RNC to Source RNC transparent container. For the second related information, reference can be made to the description of the second related information in the method embodiments in FIG. 1

In step 11, the network element of the 5G radio access network transmits an RRC message to the terminal. The RRC message may include at least one of the following: second related information of the CS handover operation from the first network to the second network, indication information of the CS handover from the first network to the second network, or target RNC to Source RNC transparent container. For the above-mentioned second related information and indication information, reference can be made to the description of the second related information in the method embodiments in FIG. 1, which will not be repeated herein.

The terminal executes related operations from the first network to the second network according to the received indication information, specifically as described in the embodiment of FIG. 4. For example, 5G security information (such as KAMF) is mapped to 3G security information (such as CK, IK), a PLMN of a terminal that is lastly served by the 5G network is mapped to an anchor PLMN, and an SUPI of the terminal is mapped to IMSI.

In step 12, the terminal accesses the 3G radio access network.

In step 13, the 3G radio access network transmits a handover completion message to the target MSC.

In step 14, the target MSC transmits the handover completion message to the MSC Server. In step 15, the MSC Server transmits a PS to CS handover completion message to the AMF.

### Third implementation manner:

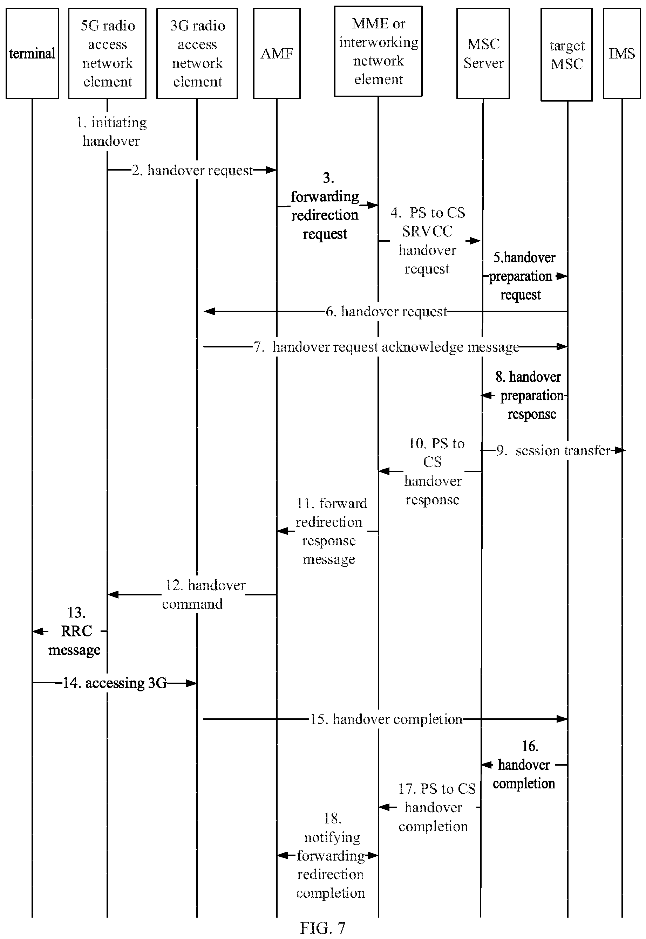

This implementation manner mainly describes a specific process of handover from a 5G network to a 3G network through a 4G network. Reference is made to FIG. 7. As shown in FIG. 7, the following steps are included.

In step 1, a network element of a 5G radio access network initiates a CS handover from the 5G network to the 3G network. The reason for the initiation may include but not limited to one of the following: receiving a QoS flow establishment request for a voice service, or a handover event occurring when a voice service exists and a terminal moves out of a 5G network.

In step 2, the network element of the 5G radio access network transmits an N2 handover request message to a network element of the 5G core network. In FIG. 7, the 5G core network element is represented as AMF. It should be understood that the present disclosure does not limit the form of the network element of the 5G core network. In other embodiments, the 5G core network may also be represented in other forms.

The handover request message includes at least one of the following: first related information of a CS operation from the first network to the second network, handover request information from the first network to the second network, indication information for a CS handover from the 5G network to the 3G network, source RNC to target RNC transparent container, CSG ID, CSG Mode, or MS Class mark 2. For the above-mentioned first related information and the handover request information, reference may be made to the descriptions of the first related information in the embodiments of FIG. 1 for details, which will not be repeated herein.

The AMF derives and maps terminal-related information of the 5G network to terminal-related information of the 3G network, or directly transmits terminal-related information of the 5G network to a 4G network element, as described in the embodiments of FIG. 2.

The mapping and deriving the terminal-related information of the 5G network to the terminal-related information of the 3G network may include at least one of the following: mapping a PLMN of a terminal lastly served by the 5G network to an anchor PLMN; mapping an SUPI of the terminal to an IMSI; mapping 5G security information (such as KAMF) to 3G security information (such as CK, IK) according to a first mapping rule of the security information; or mapping 5G security information (such as KAMF) to 4G security information (such as KASME) according to a second mapping rule of the security information.

In step 3, the AMF transmits a forwarding redirection request to a network element of the 4G network.

In FIG. 7, the network element of the 4G network is represented as an MME. It should be understood that the form of the network element of the 4G network is not limited by the present disclosure. In other embodiments, the network element of the 4G network may also be represented as other forms.

Optionally, the handover request includes second related information of a CS handover operation from the first network to the second network, Source RNC to target RNC transparent container, CSG ID, CSG Mode, MS Class mark 2, CK, IK, IMS session transfer number, emergency service indication, priority, or indication information of a CS handover from the first network to the second network. For the above-mentioned second related information, reference may be made to the descriptions of the second related information in the method embodiments in FIG. 1, which is not repeated herein.

An MME or an interworking network element determines that the received forwarding redirection request is a related operation for requesting to initiate a CS handover from the first network to the second network, according to the second related information of the CS handover operation from the first network to the second network or the indication information of the CS handover from the first network to the second network.

The MME or the interworking network element maps the received information to information of the 3G network, as described in the embodiments of FIG. 3.

The mapping the received information to the information of the 3G network may include at least one of the following: mapping a PLMN of a terminal that is lastly served by the 5G network to an anchor PLMN; mapping a SUPI of the terminal to an IMSI; mapping 5G security information (such as KAMF) to 3G security information (such as CK, IK) according to a first mapping rule of the security information; or mapping the received 4G security information (such as KAMF) to 3G security information (such as CK, IK) according to a second mapping rule of the security information.

In step 4, the MME or the interworking network element transmits a PS to CS SRVCC handover request to an MSC Server.

Optionally, the PS to CS SRVCC handover request includes: second related information about the CS handover operation from the first network to the second network, Source RNC to target RNC transparent container, CSG ID, CSG Mode, MS Class mark 2, CK, IK, IMS session transfer number, emergency service indication, priority, or indication information for a CS handover from the first network to the second network. For the above-mentioned second related information, reference may be made to the descriptions of the second related information in the method embodiments in FIG. 1, which is not repeated herein.

In step 5, the MSC Server transmits a handover preparation request to a target MSC.

In step 6, the target MSC transmits a handover request to a 3G radio access network element.

In step 7, the 3G radio access network element transmits a handover request acknowledge message to the MSC. The message includes target RNC to Source RNC transparent container.

In step 8, the target MSC transmits a handover preparation response message to the MSC Server. The message includes target RNC to Source RNC transparent container.

In step 9, the MSC Server transmits an IMS session transfer number to the IMS, to request transferring an IMS session to CS of the 3G network.

In step 10, the MSC Server transmits a PS to CS handover response message to the MME or the interworking network element. The message includes target RNC to Source RNC transparent container.

In step 11, the MME or the interworking network element maps information in the received PS to CS handover response message to a forward redirection response message and transmits it to the AMF.

Step 12 to step 16 are consistent with step 10 to step 14 in FIG. 6, and will not be repeated herein.

In step 17, the MSC Server transmits a PS to CS handover completion message to the MME or the interworking network element.

In step 18, the MME or the interworking network element maps information in the received PS to CS handover completion message to a forwarding redirection completion message and transmits it to the AMF.

### Fourth implementation manner:

This implementation manner mainly describes a specific process of a terminal accessing a 3G network. For details, reference can be made to the description in FIG. 6 and FIG. 7, the following steps are included.

In step 1, the terminal receives a handover command from a network element of a 5G radio access network, as shown in step 11 in FIG. 6 or step 13 in FIG. 7.

Optionally, the handover command indicates one of the following: second related information, indication information for a CS handover from a first network to a second network, or target RNC to Source RNC transparent container.

The terminal executes related operations from the first network to the second network according to information indicated by the handover command, specifically as described in the embodiments of FIG. 4. For example, 5G security information (such as KAMF) is mapped to 3G security information (such as CK, IK), a PLMN of a terminal that is lastly served by the 5G network is mapped to an anchor PLMN, and an SUPI of the terminal is mapped to IMSI.

In step 2, the terminal accesses a 3G network.

It should be understood that the first implementation manner, the second implementation manner and the fourth implementation manner can be combined in a system, or the first implementation manner, the third implementation manner and the fourth implementation manner can be combined, to complete the entire processes of a terminal switching from a 5G network to a 3G network, so that the terminal can support voice services or maintain the continuity of a voice service in the 3G network. In addition, the effect on the 3G network can be avoided by combining the first implementation manner, the second implementation manner and the fourth implementation manner.

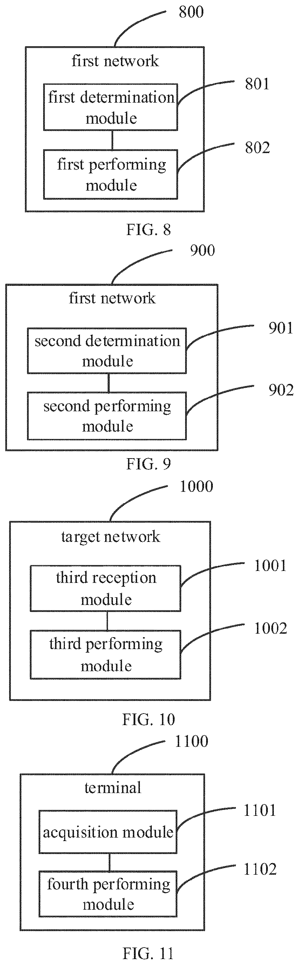

Referring to FIG. 8, FIG. 8 is a first structural diagram of a first network provided by an embodiment of the present disclosure. As shown in FIG. 8, the first network 800 includes:
a first determination module 801 configured to determine whether a precondition is met; and
a first performing module 802 configured to perform, through a third network or an interworking network element, a related operation from a first network to a second network, in a case that the precondition is met.

On the basis of FIG. 8, modules further included in the first network 800, units included in each module, and/or sub-units included in each unit are described below.

Optionally, the first performing module 802 is specifically configured to perform at least one of the following operations through the third network or the interworking network element, in a case that the precondition is met.
performing a related operation of handover from the first network to the second network;
performing a related operation of circuit switched (CS) handover from the first network to the second network;
performing a related operation of PS handover from the first network to the second network;
performing a related operation of acquiring a terminal context between the first network and the second network;
performing a related operation of data forwarding from the first network to the second network;
performing a related operation of IP address retention from the first network to the second network;
performing mapping of terminal-related information of the first network to terminal-related information of the second network;
transmitting, to a first target end, second related information of the operation from the first network to the second network; or
transmitting, to a first target end, indication information of the operation from the first network to the second network.

Optionally, the meeting the precondition includes at least one of following:
acquiring first related information of the operation from the first network to the second network;
acquiring first related information of a PS operation from the first network to the second network;
acquiring first related information of a CS operation from the first network to the second network;
receiving handover request information from the first network to the second network;
that there is no direct interface between the first network and the second network, and interaction is performed through the third network or the interworking network element; or
the terminal accessing the second network.

Optionally, the first related information includes at least one of: capability information of the second network, IMS session transfer number, international mobile subscriber identity, information for indicating whether a service is an emergency service, or priority information; and/or, the handover request information from the first network to the second network includes at least one of: indication information for CS handover from the first network to the second network; or indicating a target network as the second network, transparent container information of a source radio access network to a target radio access network of a second network type.

Optionally, the first performing module 802 is specifically configured to perform at least one of following:
mapping terminal-related information of the first network to terminal-related information of the second network;
mapping terminal-related information of the first network to terminal-related information of the third network;
transmitting, to the first target end or a network element of the third network, second related information of a CS handover operation from the first network to the second network;
transmitting, to the first target end or a network element of the third network, indication information of a CS handover operation from the first network to the second network; or
transmitting, to the first target end or a network element of the third network, a handover request from the first network to the third network, where the handover request includes indication information and/or second related information of a CS handover operation from the first network to the second network.

Optionally, the second related information includes at least one of the following:
identification information of a target radio access network node of the second network, security information of the second network, anchor network identity information, supported circuit switched domain voice codec list information, information of mobile station class mark 2, information of mobile station class mark 3, transparent container information of a source radio access network to a target radio access network of a second network type, an IMS session transfer number, an international mobile subscriber identity, mobile station network capability information, user equipment network capability (UE network capability), information for indicating whether a service is an emergency service, priority information, the terminal-related information of the first network, the terminal-related information of the second network, terminal-related information of the third network, or information about serving gateway selection.

Optionally, the indication information of the CS handover operation from the first network to the second network includes at least one of following:
indication information for a CS handover from the first network to the second network;
indication information for initiating a CS handover from the third network to the second network; or
indication information for initiating a CS handover from the interworking network element to the second network.

Optionally, the first network 800 further includes: a first reception module configured to receive a CS handover response from the first network to the second network, where the CS handover response is returned by the second network.

Optionally, the first network is a 5G network; the second network is a 3G network; and the third network is a 4G network.

The first network 800 can implement various processes performed by the network element of the first network in the method embodiments of FIG. 1 of the present disclosure, and can achieve the same beneficial effects. To avoid repetition, details are not described herein again.

Referring to FIG. 9, FIG. 9 is a second structural diagram of a first network provided by an embodiment of the present disclosure. As shown in FIG. 9, the first network 900 includes: a second determination module 901 configured to determine whether a precondition is met; and a second performing module 902 configured to perform a related operation from a first network to a second network, in a case that the precondition is met, where the first network is a 5G network, and the second network is a 3G network; or, the first network is a 3G network, and the second network is a 5G network.

Optionally, the second performing module 902 is specifically configured to, in a case that the precondition is met, perform at least one of the following:
performing a related operation of handover from the first network to the second network;
performing a related operation of circuit switched (CS) handover from the first network to the second network;
performing a related operation of PS handover from the first network to the second network;
performing a related operation of acquiring a terminal context between the first network and the second network;
performing a related operation of data forwarding from the first network to the second network;
performing a related operation of IP address retention from the first network to the second network;
performing mapping of terminal-related information of the first network to terminal-related information of the second network;
transmitting, to a first target end, second related information of the operation from the first network to the second network; or
transmitting, to a first target end, indication information of the operation from the first network to the second network.

Optionally, the meeting the precondition includes at least one of the following:
acquiring first related information of the operation from the first network to the second network;
acquiring first related information of a PS operation from the first network to the second network;
acquiring first related information of a CS operation from the first network to the second network;
receiving handover request information from the first network to the second network;
determining there is no direct interface between the first network and the second network, and performing interaction through the third network or the interworking network element;
determining there is a direct interface between the first network and the second network;
the terminal accessing the second network.

Optionally, the first related information includes at least one of: capability information of the second network, an IMS session transfer number, an international mobile subscriber identity, information for indicating whether a service is an emergency service, or priority information; and/or, the handover request information from the first network to the second network includes at least one of: indication information for CS handover from the first network to the second network; or indicating a target network as the second network, and transparent container information of a source radio access network to a target radio access network of a second network type.

Optionally, the second performing module 902 is specifically configured to, in a case that the precondition is met, perform at least one of the following:
mapping terminal-related information of the first network to terminal-related information of the second network;
mapping terminal-related information of the first network to terminal-related information of the third network;
transmitting, to the first target end, a CS handover request from the first network to the second network;
transmitting, to the first target end, second related information of a CS handover operation from the first network to the second network; or
transmitting, to the first target end, indication information of a CS handover operation from the first network to the second network.

Optionally, the second related information includes at least one of the following: identification information of a target radio access network node of the second network, security information of the second network, anchor network identity information, supported circuit switched domain voice codec list information, information of mobile station class mark 2, information of mobile station class mark 3, transparent container information of a source radio access network to a target radio access network of a second network type, an IMS session transfer number, an international mobile subscriber identity, mobile station network capability information, user equipment network capability, information for indicating whether a service is an emergency service, priority information, the terminal-related information of the first network, the terminal-related information of the second network, terminal-related information of the third network, or information about serving gateway selection.

Optionally, the indication information of the CS handover operation from the first network to the second network includes at least one of following: indication information of handover from the first network to the second network; or indication information of CS handover from the third network to the second network.

Optionally, the second performing module 902 is specifically configured to perform at least one of the following operations: mapping security information of the first network to security information of the second network; mapping network identity information of a terminal served by the first network to anchor network identity information; or mapping a user identity of the first network of a terminal to a user identity of the second network.

Optionally, the first network 900 further includes: a second reception module configured to receive a CS handover response from the first network to the second network, where the CS handover response is returned by the second network.

The first network 900 can implement each of the processes performed by the first network in the method embodiments of the present disclosure corresponding to FIG.2 and can achieve the same beneficial effects. To avoid repetition, details are not described herein again.

Reference is made to FIG. 10, which is a first structural diagram of a target network provided by an embodiment of the present disclosure. The target network in this embodiment may be a third network or a network to which an interworking network element belongs. As shown in FIG. 10, the target network 1000 includes: a third reception module 1001 configured to receive information transmitted by a second target end; and a third performing module 1002 configured to perform, according to the information, a related operation from a first network to a second network.

Optionally, the information includes at least one of the following:
second related information of the operation from the first network to the second network;
second related information of a CS handover operation from the first network to the second network;
indication information of the operation from the first network to the second network;
indication information of a CS handover operation from the first network to the second network;
information of the first network;
information of the second network mapped from the first network;
information of the third network mapped from the first network; or
information about serving gateway selection.

Optionally, the second target end includes at least one of the following: a terminal, a network element of the first network, or a network element of the second network.

Optionally, the second related information includes at least one of the following: identification information of a target radio access network node of the second network, security information of the second network, anchor network identity information, supported circuit switched domain voice codec list information, information of mobile station class mark 2, information of mobile station class mark 3, transparent container information of a source radio access network to a target radio access network of a second network type, an IMS session transfer number, an international mobile subscriber identity, mobile station network capability information, user equipment network capability (UE network capability), information for indicating whether a service is an emergency service, priority information, the terminal-related information of the first network, the terminal-related information of the second network, terminal-related information of the third network, or the information about serving gateway selection.

Optionally, the indication information of the CS handover operation from the first network to the second network includes at least one of the following: indication information for a CS handover from the first network to the second network; indication information for initiating a CS handover from the third network to the second network; or indication information for initiating a CS handover from the interworking network element to the second network.

Optionally, the third performing module is specifically configured to perform, according to the information, at least one of following operations:
deriving information to be transmitted by the third network to the second network, based on a mapping of information transmitted by the first network to the third network, and transmitting the information to the second network;
deriving, information to be transmitted by the third network to the first network, based on a mapping of information transmitted by the second network to the third network, and transmitting the information to the first network;
mapping and transferring information between a first interface and a second interface;
initiating a request for CS handover from the third network to the second network;
initiating a request for CS handover from the interworking network element to the second network;
initiating a request for CS handover from the interworking network element to the second network;
initiating a request for PS handover from the third network to the second network;
initiating a request for PS handover from the interworking network element to the second network;
performing a related operation of a terminal context from the first network to the second network;
mapping terminal-related information of the first network to terminal-related information of the second network;
transmitting, to the second network, received information transmitted by a second target end;
mapping received terminal-related information of the first network to terminal-related information of the second network;
mapping received terminal-related information of the third network to the terminal-related information of the second network; or
selecting a serving gateway for a terminal,
where the first interface is an interface between the second network and the third network; and the second interface is an interface between the first network and the third network.

Optionally, the mapping of the terminal-related information of the first network to the terminal-related information of the second network includes at least one of the following:
mapping security information of the first network to security information of the second network;
mapping network identity information of a terminal served by the first network to anchor network identity information; or
mapping a user identity of the first network of a terminal to a user identity of the second network.

Optionally, the mapping the security information of the first network to the security information of the second network includes at least one of following:
directly mapping, according to a first mapping rule, the security information of the first network to the security information of the second network; or
mapping, according to a second mapping rule, the security information of the first network to security information of the third network, and the security information of the third network to the security information of the second network.

Optionally, the first network is a 5G network; the second network is a 3G network; and the third network is a 4G network.

The target network 1000 can implement various processes performed by the network element or the interworking network element of the third network in the method embodiments of the present disclosure, and can achieve the same beneficial effects. To avoid repetition, details are not described herein again.

Referring to FIG. 11, FIG. 11 is a first structural diagram of a terminal provided by an embodiment of the present disclosure. As shown in FIG. 11, the terminal 1100 includes:
acquiring characteristic information of an operation from a first network to a second network; and
performing, according to the characteristic information, a related operation from the first network to the second network.

Optionally, the characteristic information of operation from the first network to the second network includes at least one of following:
indication information of a handover operation from the first network to the second network;
second related information of a CS handover operation from the first network to the second network;
second related information of the operation from the first network to the second network; or
the terminal moving from the first network to the second network.

Optionally, the indication information of the handover operation from the first network to the second network includes at least one of following:
indication information of a handover from the first network to the second network;
indication information for a CS handover from the first network to the second network; or
transparent container information of a target radio access network to a source radio access network of a second network type.

Optionally, the fourth performing module 1104 is specifically configured to map terminal-related information of the first network to terminal-related information of the second network.

Optionally, the fourth performing module 1104 is specifically configured to perform at least one of the following operations:
mapping a user identity of the first network of the terminal to a user identity of the second network;
mapping network identity information of a terminal served by the first network to anchor network identity information; or
mapping security information of the first network to security information of the second network.

Optionally, the fourth performing module 1104 is specifically configured to perform at least one of the following operations: directly mapping, according to a first mapping rule, the security information of the first network to the security information of the second network; or mapping, according to a second mapping rule, the security information of the first network to security information of the third network, and the security information of the third network to the security information of the second network.

Optionally, the terminal 1100 further includes: a first transmission module is configured to transmit, to the first network, first related information of a CS handover operation from the first network to the second network; or, transmit, to the first network, first related information of the operation from the first network to the second network.

Optionally, the second related information includes at least one of the following: identification information of a target radio access network node of the second network, security information of the second network, anchor network identity information, supported circuit switched domain voice codec list information, information of mobile station class mark 2, information of mobile station class mark 3, transparent container information of a source radio access network to a target radio access network of a second network type, an IMS session transfer number, an international mobile subscriber identity, mobile station network capability information, user equipment network capability (UE network capability), information for indicating whether a service is an emergency service, priority information, the terminal-related information of the first network, the terminal-related information of the second network, terminal-related information of the third network, or information about serving gateway selection.

Optionally, the first network is a 5G network; the second network is a 3G network; and the third network is a 4G network.

The terminal 1100 can implement various processes performed by the terminal in the method embodiments of the present disclosure and can achieve the same beneficial effects. To avoid repetition, details are not described herein again.

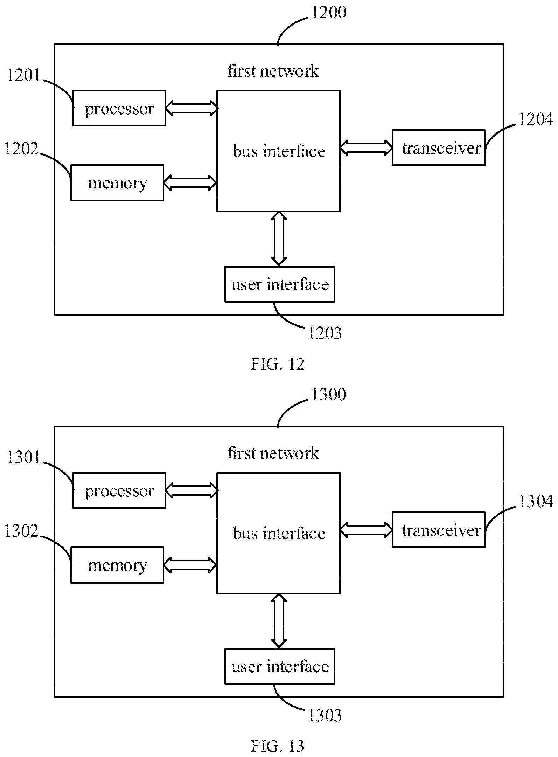

Referring to FIG. 12, FIG. 12 is a third structural diagram of a first network provided by an embodiment of the present disclosure. As shown in FIG. 12, the first network 1200 includes: a processor 1201, a memory 1202, a user interface 1203, a transceiver 1204, and a bus interface.

In an embodiment of the present disclosure, the first network 1200 further includes a computer program stored in the memory 1202 and executable by the processor 1201. The computer program is executed by the processor 1201 to implement following steps: determining whether a precondition is met; and performing, through a third network or an interworking network element, a related operation from a first network to a second network, in a case that the precondition is met.

In FIG. 12, the bus architecture may include any number of interconnected buses and bridges. Specifically, various circuits including one or more processors represented by the processor 1201 and a memory represented by the memory 1202 are linked together. The bus architecture can also link various other circuits such as peripherals, voltage regulators, power management circuits, etc., which are all known in the art, and therefore, no further descriptions are provided herein. The bus interface provides an interface. The transceiver 1204 may include a plurality of elements, that is, including a transmitter and a receiver, and provide a unit for communicating with various other devices on a transmission medium. For different user equipment, the user interface 1203 may also be an interface capable of externally or internally connecting to required equipment. The connected equipment includes but not limited to a keypad, a display, a speaker, a microphone, a joystick, and the like.

The processor 1201 is responsible for managing the bus architecture and general processing, and the memory 1202 may store data used by the processor 2601 when performing operations.

Optionally, when executing the computer program, the processor 1201 may be further configured to: in a case that the precondition is met, perform, through the third network or the interworking network element, at least one of the following operations:
performing a related operation of a handover from the first network to the second network;
performing a related operation of a circuit switched (CS) handover from the first network to the second network;
performing a related operation of a PS handover from the first network to the second network;
performing a related operation of acquiring a terminal context between the first network and the second network;
performing a related operation of data forwarding from the first network to the second network;
performing a related operation of IP address retention from the first network to the second network;
performing mapping of terminal-related information of the first network to terminal-related information of the second network;
transmitting, to a first target end, second related information of the operation from the first network to the second network; or
transmitting, to a first target end, indication information of the operation from the first network to the second network.

Optionally, the meeting the precondition includes at least one of the following:
acquiring first related information of the operation from the first network to the second network;
acquiring first related information of a PS operation from the first network to the second network;
acquiring first related information of a CS operation from the first network to the second network;
receiving handover request information from the first network to the second network;
there being no direct interface between the first network and the second network, and performing interaction through the third network or the interworking network element; or
a terminal accessing the second network.

Optionally, the first related information includes at least one of: capability information of the second network, an IMS session transfer number, an international mobile subscriber identity, information for indicating whether a service is an emergency service, or priority information; and/or, the handover request information from the first network to the second network includes at least one of: indication information for a CS handover from the first network to the second network; or indicating a target network as the second network, transparent container information of a source radio access network to a target radio access network of a second network type.

Optionally, when executing the computer program, the processor 1201 may be further configured to implement following steps:
mapping terminal-related information of the first network to terminal-related information of the second network;
mapping terminal-related information of the first network to terminal-related information of the third network;
transmitting, to the first target end or a network element of the third network, second related information of a CS handover operation from the first network to the second network;
transmitting, to the first target end or a network element of the third network, indication information of a CS handover operation from the first network to the second network; or
transmitting, to the first target end or a network element of the third network, a handover request from the first network to the third network, where the handover request includes indication information and/or second related information of a CS handover operation from the first network to the second network.

Optionally, the second related information includes at least one of the following: identification information of a target radio access network node of the second network, security information of the second network, anchor network identity information, supported circuit switched domain voice codec list information, information of mobile station class mark 2, information of mobile station class mark 3, transparent container information of a source radio access network to a target radio access network of a second network type, an IMS session transfer number, an international mobile subscriber identity, mobile station network capability information, user equipment network capability (UE network capability), information for indicating whether a service is an emergency service, priority information, the terminal-related information of the first network, the terminal-related information of the second network, terminal-related information of the third network, or information about serving gateway selection.

Optionally, the indication information of the CS handover operation from the first network to the second network includes at least one of following: indication information for a CS handover from the first network to the second network; indication information for initiating a CS handover from the third network to the second network; or indication information for initiating a CS handover from the interworking network element to the second network.

Optionally, when executing the computer program, the processor 1201 may be further configured to receive a CS handover response from the first network to the second network, where the CS handover response is returned by the second network.

Optionally, the first network is a 5G network; the second network is a 3G network; and the third network is a 4G network.

The first network 1200 can implement various processes implemented by the first network in the method embodiments of FIG. 1 described above, which are not described herein again, to avoid repetition.

Referring to FIG. 13, FIG. 13 is a fourth structural diagram of a first network provided by an embodiment of the present disclosure. As shown in FIG. 13, the first network 1300 includes: a processor 1301, a memory 1302, a user interface 1303, a transceiver 1304, and a bus interface.

In the embodiment of the present disclosure, the first network 1300 further includes: a computer program stored in the memory 1302 and executable on the processor 1301, and the computer program is executed by the processor 1301 to implement the following steps: determining whether a precondition is met; and performing a related operation from a first network to a second network, in a case that the precondition is met, where the first network is a 5G network, and the second network is a 3G network; or, the first network is a 3G network, and the second network is a 5G network.

In FIG. 13, the bus architecture may include any number of interconnected buses and bridges. Specifically, various circuits including one or more processors represented by the processor 1301 and a memory represented by the memory 1302 are linked together. The bus architecture can also link various other circuits such as peripherals, voltage regulators, power management circuits, etc., which are all known in the art, and therefore, no further descriptions are provided herein. The bus interface provides an interface. The transceiver 1304 may include a plurality of elements, that is, including a transmitter and a receiver, and provide a unit for communicating with various other devices on a transmission medium. For different user equipment, the user interface 1303 may also be an interface capable of connecting externally or internally with the required equipment. The connected equipment includes but not limited to a keypad, a display, a speaker, a microphone, a joystick, etc.

The processor 1301 is responsible for managing the bus architecture and general processing, and the memory 1302 may store data used by the processor 2601 when performing operations.

Optionally, when executing the computer program, the processor 1301 may be further configured to perform, in a case that the precondition is met, at least one of the following operations:
performing a related operation of a handover from the first network to the second network;
performing a related operation of a circuit switched (CS) handover from the first network to the second network;
performing a related operation of a PS handover from the first network to the second network;
performing a related operation of acquiring a terminal context between the first network and the second network;
performing a related operation of data forwarding from the first network to the second network;
performing a related operation of IP address retention from the first network to the second network;
performing mapping of terminal-related information of the first network to terminal-related information of the second network;
transmitting, to a first target end, second related information of the operation from the first network to the second network; or
transmitting, to a first target end, indication information of the operation from the first network to the second network.

Optionally, the meeting the precondition includes at least one of following:
acquiring first related information of the operation from the first network to the second network;
acquiring first related information of a PS operation from the first network to the second network;
acquiring first related information of a CS operation from the first network to the second network;
receiving handover request information from the first network to the second network;
determining that there is no direct interface between the first network and the second network, and that interaction is performed through a third network or an interworking network element;
a terminal accessing the second network; or
determining there is a direct interface between the first network and the second network.

Optionally, the first related information includes at least one of: capability information of the second network, an IMS session transfer number, an international mobile subscriber identity, information for indicating whether a service is an emergency service, or priority information; and/or, the handover request information from the first network to the second network includes at least one of: indication information for a CS handover from the first network to the second network; or indicating a target network as the second network, and transparent container information of a source radio access network to a target radio access network of a second network type.

Optionally, when executing the computer program, the processor 1301 may be further configured to perform the following steps:
mapping terminal-related information of the first network to terminal-related information of the second network;
mapping terminal-related information of the first network to terminal-related information of the third network;
transmitting, to the first target end, a CS handover request from the first network to the second network;
transmitting, to the first target end, second related information of a CS handover operation from the first network to the second network; or
transmitting, to the first target end, indication information of a CS handover operation from the first network to the second network.

Optionally, the second related information includes at least one of the following: identification information of a target radio access network node of the second network, security information of the second network, anchor network identity information, supported circuit switched domain voice codec list information, information of mobile station class mark 2, information of mobile station class mark 3, transparent container information of a source radio access network to a target radio access network of a second network type, an IMS session transfer number, an international mobile subscriber identity, mobile station network capability information, user equipment network capability (UE network capability), information for indicating whether a service is an emergency service, priority information, the terminal-related information of the first network, the terminal-related information of the second network, terminal-related information of the third network, or information about serving gateway selection.

Optionally, the indication information of the CS handover operation from the first network to the second network includes at least one of the following: indication information for a handover from the first network to the second network; or indication information for a CS handover from the third network to the second network.

Optionally, when executing the computer program, the processor 1301 may be further configured to perform the following steps: mapping security information of the first network to security information of the second network; mapping network identity information of a terminal served by the first network to anchor network identity information; or mapping a user identity of the first network of a terminal to a user identity of the second network.

Optionally, when executing the computer program, the processor 1301 may be further configured to receive a CS handover response from the first network to the second network, where the CS handover response is returned by the second network.

The first network 1300 can implement various processes implemented by the first network in the method embodiments of FIG. 2 described above. To avoid repetition, details are not described herein again.

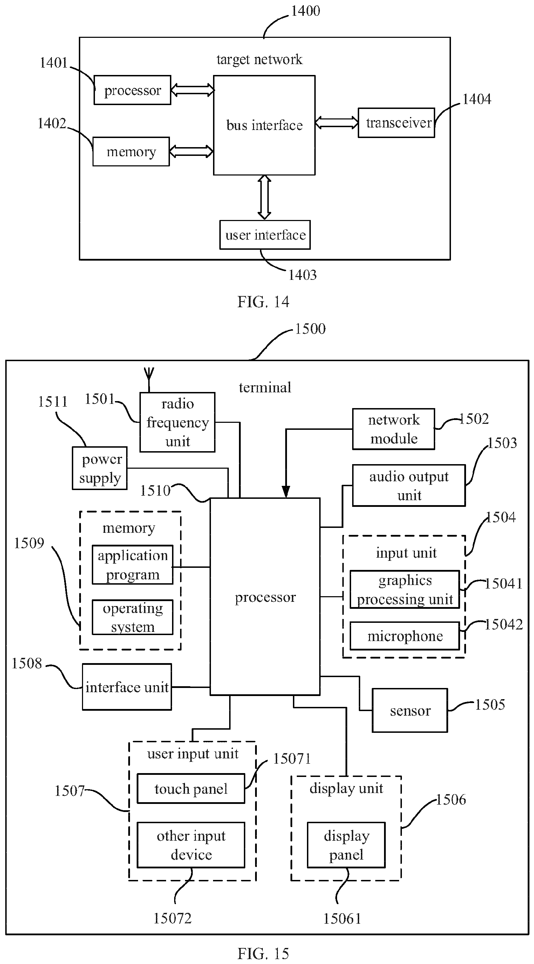

Referring to FIG. 14, FIG. 14 is a second structural diagram of a target network provided by an embodiment of the present disclosure. The target network in this embodiment may be a third network or a network to which an interworking network element belongs. As shown in FIG. 14, the target network 1400 includes a processor 1401, a memory 1402, a user interface 1403, a transceiver 1404, and a bus interface.

In the embodiment of the present disclosure, the target network 1400 further includes: a computer program stored in the memory 1402 and executable on the processor 1401. The computer program is executed by the processor 1401 to implement the following steps: receiving information transmitted by a second target end; and performing, according to the information, a related operation from a first network to a second network.

In FIG. 14, the bus architecture may include any number of interconnected buses and bridges. Specifically, various circuits including one or more processors represented by the processor 1401 and a memory represented by the memory 1402 are linked together. The bus architecture can also link various other circuits such as peripherals, voltage regulators, power management circuits, etc., which are all known in the art, and therefore, no further descriptions are provided herein. The bus interface provides an interface. The transceiver 1404 may include multiple elements, that is, including a transmitter and a receiver, and provide a unit for communicating with various other devices on a transmission medium. For different user equipment, the user interface 1403 may also be an interface capable of connecting externally and internally with the required equipment. The connected equipment includes but not limited to a keypad, a display, a speaker, a microphone, a joystick, etc.

The processor 1401 is responsible for managing the bus architecture and general processing, and the memory 1402 can store data used by the processor 2601 when performing operations.

Optionally, the information includes at least one of the following:
second related information of the operation from the first network to the second network;
second related information of a CS handover operation from the first network to the second network;
indication information of the operation from the first network to the second network;
indication information of a CS handover operation from the first network to the second network;
information of the first network;
information of the second network mapped from the first network;
information of the third network mapped from the first network; or
information about serving gateway selection.

Optionally, the second target end includes at least one of: a terminal, a network element of the first network, or a network element of the second network.

Optionally, the second related information includes at least one of: identification information of a target radio access network node of the second network, security information of the second network, anchor network identity information, supported circuit switched domain voice codec list information, information of mobile station class mark 2, information of mobile station class mark 3, transparent container information of a source radio access network to a target radio access network of a second network type, an IMS session transfer number, an international mobile subscriber identity, mobile station network capability information, user equipment network capability (UE network capability), information for indicating whether a service is an emergency service, priority information, the terminal-related information of the first network, the terminal-related information of the second network, terminal-related information of the third network, or the information about serving gateway selection.

Optionally, the indication information of the CS handover operation from the first network to the second network includes at least one of the following: indication information for a CS handover from the first network to the second network; indication information for initiating a CS handover from the third network to the second network; or indication information for initiating a CS handover from the interworking network element to the second network.

Optionally, when executing the computer program, the processor 1401 may be further configured to implement the following steps:
deriving information to be transmitted by the third network to the second network, based on a mapping of information transmitted by the first network to the third network, and transmitting the information to the second network;
deriving, information to be transmitted by the third network to the first network, based on a mapping of information transmitted by the second network to the third network, and transmitting the information to the first network;
mapping and transferring information between a first interface and a second interface;
initiating a request for CS handover from the third network to the second network;
initiating a request for CS handover from the interworking network element to the second network;
initiating a request for PS handover from the third network to the second network;
initiating a request for PS handover from the interworking network element to the second network;
performing a related operation of a terminal context from the first network to the second network;
mapping terminal-related information of the first network to terminal-related information of the second network;
transmitting, to the second network, the received information transmitted by the second target end;
mapping received terminal-related information of the first network to terminal-related information of the second network;
mapping received terminal-related information of the third network to the terminal-related information of the second network; or
selecting a serving gateway for a terminal,
where the first interface is an interface between the second network and the third network; and the second interface is an interface between the first network and the third network.

Optionally, when executing the computer program, the processor 1401 may be further configured to implement the following steps: mapping security information of the first network to security information of the second network; mapping network identity information of a terminal served by the first network to anchor network identity information; or mapping a user identity of the first network of a terminal to a user identity of the second network.

Optionally, when executing the computer program, the processor 1401 may be further configured to implement the following steps:: directly mapping, according to a first mapping rule, the security information of the first network to the security information of the second network; or mapping, according to a second mapping rule, the security information of the first network to security information of the third network, and the security information of the third network to the security information of the second network.

Optionally, the first network is a 5G network; the second network is a 3G network; and the third network is a 4G network.

The target network 1400 can implement each process implemented by the third network in the foregoing method embodiments, and in order to avoid repetition, details are not described herein again.

Referring to FIG. 15. FIG. 15 is a second structural diagram of a terminal provided by an embodiment of the present disclosure. The terminal may be a schematic diagram of a hardware structure of a terminal that implements various embodiments of the present disclosure. As shown in FIG. 15, the terminal 1500 includes but is not limited to: a radio frequency unit 1501, a network module 1502, an audio output unit 1503, an input unit 1504, a sensor 1505, a display unit 1506, a user input unit 1507, an interface unit 1508, a memory 1509, a processor 1510, a power supply 1511 and other components. Those skilled in the art can understand that the terminal structure shown in FIG. 15 does not constitute a limitation on the terminal, and the terminal may include more or fewer components than these shown in the figure, or combine certain components, or have different arrangement of components. In the embodiments of the present disclosure, terminals include, but are not limited to, mobile phones, tablet computers, notebook computers, palmtop computers, vehicle-mounted terminals, wearable devices, and pedometers.

The processor 1510 is configured to: acquire characteristic information of an operation from a first network to a second network; and perform, according to the characteristic information, a related operation from the first network to the second network.

Optionally, the characteristic information of operation from the first network to the second network includes at least one of following: indication information of a handover operation from the first network to the second network; second related information of a CS handover operation from the first network to the second network; second related information of the operation from the first network to the second network; or the terminal moving from the first network to the second network.

Optionally, the indication information of the handover operation from the first network to the second network includes at least one of following: indication information of a handover from the first network to the second network; indication information for a CS handover from the first network to the second network; or transparent container information of a target radio access network to a source radio access network of a second network type.

Optionally, the processor 1510 is further configured to: map terminal-related information of the first network to terminal-related information of the second network.

Optionally, the processor 1510 is further configured to: map a user identity of the first network of the terminal to a user identity of the second network; map network identity information of a terminal served by the first network to anchor network identity information; or map security information of the first network to security information of the second network.

Optionally, the processor 1510 is further configured to: directly map, according to a first mapping rule, the security information of the first network to the security information of the second network; or map, according to a second mapping rule, the security information of the first network to security information of the third network, and the security information of the third network to the security information of the second network.

Optionally, the processor 1510 is further configured to: transmit, to the first network, first related information of a CS handover operation from the first network to the second network; or, transmit, to the first network, first related information of the operation from the first network to the second network.

Optionally, the second related information includes at least one of the following: identification information of a target radio access network node of the second network, security information of the second network, anchor network identity information, supported circuit switched domain voice codec list information, information of mobile station class mark 2, information of mobile station class mark 3, transparent container information of a source radio access network to a target radio access network of a second network type, an IMS session transfer number, an international mobile subscriber identity, mobile station network capability information, user equipment network capability (UE network capability), information for indicating whether a service is an emergency service, priority information, the terminal-related information of the first network, the terminal-related information of the second network, terminal-related information of the third network, or information about serving gateway selection.

Optionally, the first network is a 5G network; and the second network is a 3G network.

It should be noted that the foregoing terminal 1500 in these embodiments can implement each process in the method embodiments in the embodiments of the present disclosure and can achieve the same beneficial effects. To avoid repetition, details are not repeated herein.

It should be understood that, in embodiments of the present disclosure, the radio frequency unit 1501 may be configured to receive and send information, or receive and send a signal during a call. Specifically, downlink data from a base station is received and processed by the processor 1510; in addition, uplink data is transmitted to the base station. Generally, the radio frequency unit 1501 includes, but not limited to, an antenna, at least one amplifier, a transceiver, a coupler, a low noise amplifier, a duplexer, and the like. In addition, the radio frequency unit 1501 can also communicate with other devices through a wireless communication system and a network.

The terminal provides users with wireless broadband Internet access through the network module 1502, such as helping users to send and receive an email, browse a web page, and access a streaming media.

The audio output unit 1503 may convert audio data received by the radio frequency unit 1501 or the network module 1502, or stored in the memory 1509 into an audio signal and output the audio signal as sounds. Moreover, the audio output unit 1503 may also provide audio output related to a specific function performed by the terminal 1500 (for example, call signal reception sound, message reception sound, etc.). The audio output unit 1503 includes a speaker, a buzzer, and a receiver.

The input unit 1504 is configured to receive audio or video signals. The input unit 1504 may include a graphics processing unit (Graphics Processing Unit, GPU) 15041 and a microphone 15042, and the graphics processing unit 15041 is configured to process image data of a video image or a still picture obtained by an image capture device (such as a camera) in a video capture mode or an image capture mode. The processed image frame may be displayed on the display unit 1506. The image frame processed by the graphics processor 15041 may be stored in the memory 1509 (or other storage medium) or transmitted via the radio frequency unit 1501 or the network module 1502. The microphone 15042 can receive sound, and can process such sound into audio data. The processed audio data may be converted into a format that can be transmitted to a mobile communication base station via the radio frequency unit 1501 for output, in the case of a telephone call mode.

The terminal 1500 further includes at least one sensor 1505, such as an optical sensor, a motion sensor, or other sensors. Specifically, the optical sensor includes an ambient light sensor and a proximity sensor. The ambient light sensor may adjust brightness of the display panel 15061 according to the brightness of the ambient light, and the proximity sensor may close the display panel 15061 and/or backlight when the terminal 1500 approaches to the ear. As a type of motion sensor, an accelerometer sensor may detect the magnitude of acceleration in various directions (usually three-axis directions), and detect the magnitude and direction of gravity when in the stationary state. The accelerometer sensor may be applied to identify the pose of the terminal (such as switching of horizontal and vertical screen, a correlated game, magnetometer pose calibration), a function about vibration recognition (such as pedometer, tapping). The sensor 1505 may also include a fingerprint sensor, a pressure sensor, an iris sensor, a molecular sensor, a gyroscope, a barometer, a hygrometer, a thermometer, an infrared sensors, or the like, which are not described herein.

The display unit 1506 is configured to display information input by the user or information provided for the user. The display unit 1506 may include a display panel 15061. The display panel 15061 may be configured in the form of a liquid crystal display (Liquid Crystal Display, LCD), an organic light-emitting diode (Organic Light-Emitting Diode, OLED), or the like.

The user input unit 1507 may be configured to receive inputted numeric or character information, and generate key signal inputs related to user settings and function control of the terminal. Specifically, the user input unit 1507 includes a touch panel 15071 and other input device 15072. The touch panel 15071, also known as a touch screen, may collect a touch operation of a user thereon or thereby (for example, an operation on or around the touch panel 15071 that is made by a user with a finger, a touch pen or any other suitable object or accessory). The touch panel 15071 may include two parts: a touch detection device and a touch controller. The touch detection device detects touch orientation of the user, detects a signal caused by the touch operation, and transmits the signal to the touch controller. The touch controller receives touch information from the touch detection device, converts the touch information into contact coordinates, and transmits the contact coordinates to the processor 1510. The touch controller may receive a command from by the processor 1510 and executes the command. In addition, the touch panel 15071 may be implemented by various types such as a resistive panel, a capacitive panel, an infrared panel, or a surface acoustic wave panel. In addition to the touch panel 15071, the user input unit 1507 may include other input device 15072. Specifically, the other input device 15072 may include, but is not limited to, a physical keyboard, a function key (such as a volume control key, a switch key), a trackball, a mouse, or a joystick, which are not described herein.

Further, the display panel 15061 may be covered by the touch panel 15071. When the touch panel 15071 detects a touch operation on or near the touch panel 15071, the touch panel 15071transmits the touch operation to the processor 1510 to determine the type of the touch event, and the processor 1510 provides a corresponding visual output on the display panel 15061 according to the type of touch event. Although the touch panel 15071 and the display panel 15061 are implemented as two independent components to implement the input and output functions of the terminal in Fig. 15, in some embodiments, the touch panel 15071 and the display panel 15061 may be integrated to implement the input and output functions of the terminal, which are not limited herein.

The interface unit 1508 is an interface through which an external device is connected to the terminal 1500. For example, the external device may include a wired or wireless headset port, an external power (or battery charger) port, a wired or wireless data port, a memory card port, a port for connecting a device with an identity module, an audio input/output (I/O) port, a video I/O port, a headphone port, etc. The interface unit 1508 may be configured to receive input (e.g., data information, power, etc.) from an external device and transmit the received input to one or more elements in the terminal 1500 or may be configured to transmit data between the terminal 1500 and the external device.

The memory 1509 may be configured to store software programs and various data. The memory 1509 may mainly include a program storage area and a data storage area, where the program storage area may store an operating system, an application program (such as a sound playback function, an image playback function, etc.) required for at least one function; the data storage area may store data (such as audio data, a phone book, etc.) created according to the use of the mobile phone. In addition, the memory 1509 may include a highspeed random access memory, and may further include a non-volatile memory, such as at least one magnetic disk storage device, a flash memory device, or other volatile solid-state storage device.

The processor 1510 is a control center of the terminal, which uses various interfaces and lines to connect various parts of the entire terminal. The processor 1510 runs or executes software programs and/or modules stored in the memory 1509 and calls data stored in the memory 1509, to execute various functions of the terminal and process data, so as to monitor the terminal as a whole. The processor 1510 may include one or more processing units. Optionally, the processor 1510 may integrate an application processor and a modem processor. The application processor mainly processes an operating system, a user interface, an application program, etc., and the modem processor mainly processes wireless communications. It can be understood that the foregoing modem processor may not be integrated into the processor 1510.

The terminal 1500 may further include a power supply 1511 (such as a battery) for supplying power to various components. Optionally, the power supply 1511 may be logically connected to the processor 1510 through a power management system, so as to implement functions, such as management of charging and discharging, and power consumption management, via the power management system.

In addition, the terminal 1500 may include some functional modules that are not shown, which are not described herein again.

Optionally, embodiments of the present disclosure further provide a terminal, including a processor 1510, a memory 1509, and a computer program stored on the memory 1509 and executable by the processor 1510. When the computer program is executed by the processor 1510, the various processes of the method embodiments for random access are implemented, which can achieve the same technical effects. To avoid repetition, details are not described herein.

Embodiments of the present disclosure further provide a computer readable storage medium. A computer program is stored on the computer readable storage medium. When the computer program is executed by a processor, the various processes of the method embodiments for random access are implemented, which can achieve the same technical effects. To avoid repetition, details are not described herein. The computer readable storage medium is, for example, a read-only memory (ROM), a random access memory (RAM), a magnetic disk or an optical disk.

It should be noted that, in the present disclosure, the terms "include", "have" or any other variants thereof are meant to cover non-exclusive inclusion, so that a process, method, item or apparatus including a series of elements is not limited to those elements, and optionally includes other elements that are not specifically listed or that are inherent in the process, method, item or apparatus. With no other limitations, an element restricted by the phrase "include a ..." does not exclude the existence of other identical elements in the process, method, item or apparatus including the element.

Through the descriptions of the above embodiments, those skilled in the art can clearly understand that the methods in the above embodiments can be implemented by means of software plus a necessary universal hardware platform, and also may be implemented by hardware, but in many cases the former is preferred. Based on this understanding, the technical solution of the present disclosure that is essentially or contributes to the conventional technologies can be embodied in the form of a software product that is stored in a storage medium (such as a ROM/RAM, a magnetic disk, or an optical disc), which includes several instructions for enabling a terminal (which may be a mobile phone, a computer, a server, an air conditioner, or a network device) to execute the method described in the embodiments of the present disclosure.

The embodiments of the present disclosure are described in the above with reference to the accompanying drawings, and the present disclosure is not limited to the specific implementations described above. The specific implementations described above are merely schematic and are not restrictive. Those skilled in the art at the inspiration of the present disclosure can obtain many forms without departing from the spirit of the present disclosure and the protection scope of the claims, which all fall within the protection of the present disclosure.

## Claims

1. An operating method between networks, applied to a network element of a first network, comprising:
determining whether a precondition is met; and
performing, through a third network or an interworking network element, a related operation from a first network to a second network, in a case that the precondition is met.

2. The method according to claim 1, wherein the performing the related operation from the first network to the second network comprises at least one of following:
performing a related operation of a handover from the first network to the second network;
performing a related operation of a circuit switched (CS) handover from the first network to the second network;
performing a related operation of a PS handover from the first network to the second network;
performing a related operation of acquiring a terminal context between the first network and the second network;
performing a related operation of data forwarding from the first network to the second network;
performing a related operation of IP address retention from the first network to the second network;
performing mapping of terminal-related information of the first network to terminal-related information of the second network;
transmitting, to a first target end, second related information of the operation from the first network to the second network; or
transmitting, to a first target end, indication information of the operation from the first network to the second network.

3. The method according to claim 1, wherein the meeting the precondition comprises at least one of following:
acquiring first related information of the operation from the first network to the second network;
acquiring first related information of a PS operation from the first network to the second network;
acquiring first related information of a CS operation from the first network to the second network;
receiving handover request information from the first network to the second network;
there being no direct interface between the first network and the second network, and performing interaction through the third network or the interworking network element; or
a terminal accessing the second network.

4. The method according to claim 3, wherein the first related information comprises at least one of: capability information of the second network, an IMS session transfer number, international mobile subscriber identity, information for indicating whether a service is an emergency service, or priority information; and/or,
the handover request information from the first network to the second network comprises at least one of: indication information for a CS handover from the first network to the second network; or indicating a target network as the second network, and transparent container information of a source radio access network to a target radio access network of a second network type.

5. The method according to claim 2, wherein the performing the operation related to the CS handover from the first network to the second network comprises at least one of following:
mapping terminal-related information of the first network to terminal-related information of the second network;
mapping terminal-related information of the first network to terminal-related information of the third network;
transmitting, to the first target end or a network element of the third network, second related information of a CS handover operation from the first network to the second network;
transmitting, to the first target end or a network element of the third network, indication information of a CS handover operation from the first network to the second network; or
transmitting, to the first target end or a network element of the third network, a handover request from the first network to the third network, wherein the handover request comprises indication information and/or second related information of a CS handover operation from the first network to the second network.

6. The method according to claim 5, wherein the second related information comprises at least one of following:
identification information of a target radio access network node of the second network, security information of the second network, anchor network identity information, supported circuit switched domain voice codec list information, information of mobile station class mark 2, information of mobile station class mark 3, transparent container information of a source radio access network to a target radio access network of a second network type, an IMS session transfer number, an international mobile subscriber identity, mobile station network capability information, user equipment network capability, information for indicating whether a service is an emergency service, priority information, the terminal-related information of the first network, the terminal-related information of the second network, terminal-related information of the third network, or information about serving gateway selection.

7. The method according to claim 5, wherein the indication information of the CS handover operation from the first network to the second network comprises at least one of following:
indication information for the CS handover from the first network to the second network;
indication information for initiating a CS handover from the third network to the second network; or
indication information for initiating a CS handover from the interworking network element to the second network.

8. The method according to claim 1, wherein after performing the related operation from the first network to the second network, the method further comprises:
receiving a CS handover response from the first network to the second network, wherein the CS handover response is returned by the second network.

9. The method according to claim 1, wherein the first network is a 5G network; the second network is a 3G network; and the third network is a 4G network.

10. The method according to claim 1, wherein the first network is a 5G network; and the third network comprises an MME.

11. An operating method between networks, applied to a first network, comprising:
determining whether a precondition is met; and
performing a related operation from a first network to a second network, in a case that the precondition is met, wherein the first network is a 5G network, and the second network is a 3G network; or, the first network is a 3G network, and the second network is a 5G network.

12. The method according to claim 11, wherein the performing the related operation from the first network to the second network comprises at least one of following:
performing a related operation of a handover from the first network to the second network;
performing a related operation of a circuit switched (CS) handover from the first network to the second network;
performing a related operation of a PS handover from the first network to the second network;
performing a related operation of acquiring a terminal context between the first network and the second network;
performing a related operation of data forwarding from the first network to the second network;
performing a related operation of IP address retention from the first network to the second network;
performing mapping of terminal-related information of the first network to terminal-related information of the second network;
transmitting, to a first target end, second related information of the operation from the first network to the second network; or
transmitting, to a first target end, indication information of the operation from the first network to the second network.

13. The method according to claim 11, wherein the meeting the precondition comprises at least one of following:
acquiring first related information of the operation from the first network to the second network;
acquiring first related information of a PS operation from the first network to the second network;
acquiring first related information of a CS operation from the first network to the second network;
receiving handover request information from the first network to the second network;
determining that there is no direct interface between the first network and the second network, and that interaction is performed through a third network or an interworking network element;
a terminal accessing the second network; or
determining there is a direct interface between the first network and the second network.

14. The method according to claim 13, wherein the first related information comprises at least one of: capability information of the second network, an IMS session transfer number, an international mobile subscriber identity, information for indicating whether a service is an emergency service, or priority information; and/or,
the handover request information from the first network to the second network comprises at least one of: indication information for a CS handover from the first network to the second network; or indicating a target network as the second network, and transparent container information of a source radio access network to a target radio access network of a second network type.

15. The method according to claim 12, wherein the performing the operation related to CS handover from the first network to the second network comprises at least one of following:
mapping terminal-related information of the first network to terminal-related information of the second network;
mapping terminal-related information of the first network to terminal-related information of a third network;
transmitting, to the first target end, a CS handover request from the first network to the second network;
transmitting, to the first target end, second related information of a CS handover operation from the first network to the second network; or
transmitting, to the first target end, indication information of a CS handover operation from the first network to the second network.

16. The method according to claim 15, wherein the second related information comprises at least one of following:
identification information of a target radio access network node of the second network, security information of the second network, anchor network identity information, supported circuit switched domain voice codec list information, information of mobile station class mark 2, information of mobile station class mark 3, transparent container information of a source radio access network to a target radio access network of a second network type, an IMS session transfer number, an international mobile subscriber identity, mobile station network capability information, user equipment network capability, information for indicating whether a service is an emergency service, priority information, the terminal-related information of the first network, the terminal-related information of the second network, terminal-related information of the third network, or information about serving gateway selection.

17. The method according to claim 15, wherein the indication information of the CS handover operation from the first network to the second network comprises at least one of following:
indication information for a handover from the first network to the second network; or
indication information for a CS handover from the third network to the second network.

18. The method according to claim 15, wherein the mapping the terminal-related information of the first network to the terminal-related information of the second network comprises at least one of following:
mapping security information of the first network to security information of the second network;
mapping network identity information of a terminal served by the first network to anchor network identity information; or
mapping a user identity of the first network of a terminal to a user identity of the second network.

19. The method according to claim 11, wherein after the performing the related operation from the first network to the second network, the method further comprises:
receiving a CS handover response from the first network to the second network, wherein the CS handover response is returned by the second network.

20. The method according to claim 12 or 15, wherein the first target end comprises an MME.

21. An operating method between networks, applied to a network element or an interworking network element of a third network, comprising:
receiving information transmitted by a second target end; and
performing, according to the information, a related operation from a first network to a second network.

22. The method according to claim 21, wherein the information comprises at least one of following:
second related information of the operation from the first network to the second network;
second related information of a CS handover operation from the first network to the second network;
indication information of the operation from the first network to the second network;
indication information of a CS handover operation from the first network to the second network;
information of the first network;
information of the second network mapped from the first network;
information of the third network mapped from the first network; or
information about serving gateway selection.

23. The method according to claim 21, wherein the second target end comprises at least one of: a terminal, a network element of the first network, or a network element of the second network.

24. The method according to claim 22, wherein the second related information comprises at least one of following:
identification information of a target radio access network node of the second network, security information of the second network, anchor network identity information, supported circuit switched domain voice codec list information, information of mobile station class mark 2, information of mobile station class mark 3, transparent container information of a source radio access network to a target radio access network of a second network type, an IMS session transfer number, an international mobile subscriber identity, mobile station network capability information, user equipment network capability, information for indicating whether a service is an emergency service, priority information, terminal-related information of the first network, terminal-related information of the second network, terminal-related information of the third network, or the information about serving gateway selection.

25. The method according to claim 22, wherein the indication information of the CS handover operation from the first network to the second network comprises at least one of following:
indication information for a CS handover from the first network to the second network;
indication information for initiating a CS handover from the third network to the second network; or
indication information for initiating a CS handover from the interworking network element to the second network.

26. The method according to claim 21, wherein the performing the related operation from the first network to the second network comprises at least one of following:
deriving information to be transmitted by the third network to the second network, based on a mapping of information transmitted by the first network to the third network, and transmitting the information to the second network;
deriving, information to be transmitted by the third network to the first network, based on a mapping of information transmitted by the second network to the third network, and transmitting the information to the first network;
mapping and transferring information between a first interface and a second interface;
initiating a request for a CS handover from the third network to the second network;
initiating a request for a CS handover from the interworking network element to the second network;
initiating a request for a PS handover from the third network to the second network;
initiating a request for a PS handover from the interworking network element to the second network;
performing a related operation about a terminal context from the first network to the second network;
mapping terminal-related information of the first network to terminal-related information of the second network;
transmitting, to the second network, the received information transmitted by the second target end;
mapping received terminal-related information of the first network to terminal-related information of the second network;
mapping received terminal-related information of the third network to terminal-related information of the second network; or
selecting a serving gateway for a terminal,
wherein the first interface is an interface between the second network and the third network, and the second interface is an interface between the first network and the third network.

27. The method according to claim 26, wherein the mapping of the terminal-related information of the first network to the terminal-related information of the second network comprises at least one of following:
mapping security information of the first network to security information of the second network;
mapping network identity information of a terminal served by the first network to anchor network identity information; or
mapping a user identity of the first network of a terminal to a user identity of the second network.

28. The method according to claim 26, wherein the mapping the security information of the first network to the security information of the second network comprises at least one of following:
directly mapping, according to a first mapping rule, the security information of the first network to the security information of the second network; or
mapping, according to a second mapping rule, the security information of the first network to security information of the third network, and the security information of the third network to the security information of the second network.

29. The method according to claim 21, wherein the first network is a 5G network; the second network is a 3G network; and the third network is a 4G network.

30. The method according to claim 21, wherein the third network element comprises an MME.

31. An operating method between networks, applied to a terminal, comprising:
acquiring characteristic information of an operation from a first network to a second network; and
performing, according to the characteristic information, a related operation from the first network to the second network.

32. The method according to claim 31, wherein the characteristic information of the operation from the first network to the second network comprises at least one of following:
indication information of a handover operation from the first network to the second network;
second related information of a CS handover operation from the first network to the second network;
second related information of the operation from the first network to the second network; or
the terminal moving from the first network to the second network.

33. The method according to claim 32, wherein the indication information of the handover operation from the first network to the second network comprises at least one of following:
indication information of a handover from the first network to the second network;
indication information for a CS handover from the first network to the second network; or
transparent container information of a target radio access network to a source radio access network of a second network type.

34. The method according to claim 31, wherein the performing the related operation from the first network to the second network comprises:
mapping terminal-related information of the first network to terminal-related information of the second network.

35. The method according to claim 34, wherein the mapping the terminal-related information of the first network to the terminal-related information of the second network comprises at least one of following:
mapping a user identity of the first network of the terminal to a user identity of the second network;
mapping network identity information of a terminal served by the first network to anchor network identity information; or
mapping security information of the first network to security information of the second network.

36. The method according to claim 35, wherein the mapping the security information of the first network to the security information of the second network comprises at least one of following:
directly mapping, according to a first mapping rule, the security information of the first network to the security information of the second network; or
mapping, according to a second mapping rule, the security information of the first network to security information of the third network, and the security information of the third network to the security information of the second network.

37. The method according to claim 32, wherein the second related information comprises at least one of following:
identification information of a target radio access network node of the second network, security information of the second network, anchor network identity information, supported circuit switched domain voice codec list information, information of mobile station class mark 2, information of mobile station class mark 3, transparent container information of a source radio access network to a target radio access network of a second network type, an IMS session transfer number, an international mobile subscriber identity, mobile station network capability information, user equipment network capability, information for indicating whether a service is an emergency service, priority information, terminal-related information of the first network, terminal-related information of the second network, terminal-related information of the third network, or information about serving gateway selection.

38. The method according to claim 31, wherein before acquiring the characteristic information of the operation from the first network to the second network, the method further comprises:
transmitting, to the first network, first related information of a CS handover operation from the first network to the second network; or,
transmitting, to the first network, first related information of the operation from the first network to the second network.

39. The method according to claim 38, wherein the first related information comprises at least one of following:
capability information of the second network, an IMS session transfer number, an international mobile subscriber identity, information for indicating whether a service is an emergency service, or priority information.

40. The method according to claim 31, wherein the first network is a 5G network; and the second network is a 3G network.

41. A first network, comprising:
a first determination module configured to determine whether a precondition is met; and
a first performing module configured to perform, through a third network or an interworking network element, a related operation from a first network to a second network, in a case that the precondition is met.

42. A first network, comprising:
a second determination module configured to determine whether a precondition is met; and
a second performing module configured to perform a related operation from a first network to a second network, in a case that the precondition is met, wherein the first network is a 5G network, and the second network is a 3G network; or, the first network is a 3G network, and the second network is a 5G network.

43. A third network or interworking network element, comprising:
a third reception module configured to receive information transmitted by a second target end; and
a third performing module configured to perform, according to the information, a related operation from a first network to a second network.

44. A terminal, comprising:
an acquisition module configured to acquire characteristic information of an operation from a first network to a second network; and
a fourth performing module configured to perform, according to the characteristic information, a related operation from the first network to the second network.

45. A first network, comprising: a memory, a processor, and a computer program that is stored in the memory and executable on the processor, wherein when executing the computer program, the processor is configured to implement steps of the operating method between networks according to any one of claims 1 to 10, or to implement steps of the operating method between networks according to any one of claims 11 to 20.

46. A third network or interworking network element, comprising: a memory, a processor, and a computer program that is stored in the memory and executable on the processor, wherein when executing the computer program, the processor is configured to implement steps of the operating method between networks according to any one of claims 21 to 30.

47. A terminal, comprising: a memory, a processor, and a computer program that is stored in the memory and executable on the processor, wherein when executing the computer program, the processor is configured to implement steps of the operating method between networks according to any one of claims 31 to 40.

48. A computer-readable storage medium, wherein a computer program is stored on the computer-readable storage medium, and the computer program is executed by a processor to implement steps of the operating method between networks according to any one of claims 1 to 10, or to implement steps of the operating method between networks according to any one of claims 11 to 20, or to implement steps of the operating method between networks according to any one of claims 21 to 30, or to implement steps of the operating method between networks according to any one of claims 31 to 40.
